(19) Europäisches Patentamt
European Patent Office
Office européen des brevets

(11) **EP 1 666 559 A1**

(12) **EUROPEAN PATENT APPLICATION**
published in accordance with Art. 158(3) EPC

(43) Date of publication:
**07.06.2006 Bulletin 2006/23**

(21) Application number: **04771158.5**

(22) Date of filing: **28.07.2004**

(51) Int Cl.:
***C09K 3/00*** *(1968.09)* ***C08K 3/08*** *(1990.01)*
***C08K 5/521*** *(1990.01)* ***C08L 29/04*** *(1985.01)*
***C08L 29/14*** *(1985.01)* ***C08L 31/04*** *(1985.01)*
***C08L 101/00*** *(1985.01)* ***E04B 1/80*** *(1968.09)*

(86) International application number:
**PCT/JP2004/011105**

(87) International publication number:
**WO 2005/012454 (10.02.2005 Gazette 2005/06)**

(84) Designated Contracting States:
**AT BE BG CH CY CZ DE DK EE ES FI FR GB GR HU IE IT LI LU MC NL PL PT RO SE SI SK TR**

(30) Priority: **31.07.2003 JP 2003284508**

(71) Applicant: **Kureha Corporation**
**Tokyo 103-8552 (JP)**

(72) Inventors:
- **Hayashi, Naoki**
  **Fukushima 9748686 (JP)**
- **Katono, Hiroki**
  **Iwaki-shi,**
  **Fukushima 9748686 (JP)**
- **Ueda, Rumi**
  **Iwaki-shi,**
  **Fukushima 9748686 (JP)**
- **Ujiie, Tomomi**
  **Iwaki-shi,**
  **Fukushima 9748686 (JP)**
- **Kobayashi, Yutaka**
  **Iwaki-shi,**
  **Fukushima 9748686 (JP)**

(74) Representative: **Jones, Helen M.M.**
**Gill Jennings & Every LLP**
**Broadgate House**
**7 Eldon Street**
**London EC2M 7LH (GB)**

(54) **INFRARED ABSORBING COMPOSITION, RESIN COMPOSITION, INTERLAYER FILM FOR LAMINATED GLASS, LAMINATE, LAMINATED GLASS, AND BUILDING MATERIAL**

(57) An infrared-absorbing composition comprising a phosphoric acid ester compound including a phosphoric acid monoester represented by formula (1) below and a phosphoric acid diester represented by formula (2) below, and copper ion, wherein the ratio of the phosphoric acid monoester and the phosphoric acid diester is 30:70 to 74:26 as the molar ratio.

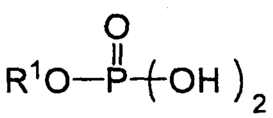
(1)

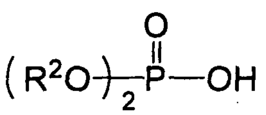
(2)

wherein $R^1$ and $R^2$ each independently represent an ester bond-containing C4-18 group, a C4-18 alkyl group, a C4-18 alkenyl group or a C4-18 alkynyl group, with the proviso that the multiple $R^2$ groups may be the same or different.

**Fig.1**

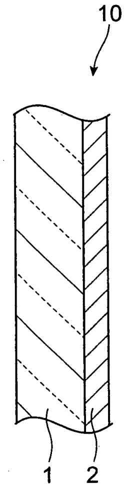


EP 1 666 559 A1

## Description

### Technical Field

The present invention relates to an infrared absorbing composition, a resin composition, an interlayer for laminated glass, a laminated body, laminated glass and a building material.

### Background Art

Japanese Unexamined Patent Publication HEI No. 9-211220 discloses a heat-absorbing composite which exhibits highly efficient performance of blocking light in the infrared range or in a longer wavelength range while having high transmittance for visible light rays, and which can easily provide adequate heat resistance and surface hardness. This heat-absorbing composite comprises an interlayer between a base layer and upper layer made of transparent materials. The interlayer contains a resin component and an infrared-absorbing component. The infrared-absorbing component includes divalent copper ion and a phosphorus-containing compound composed of a phosphoric acid ester or phosphonic acid ester.

### Disclosure of the Invention

Heat-absorbing composites can be used as laminated glass for vehicles, for example. The interlayer of such laminated glass for vehicles is formed between two panels of glass, and is composed of an infrared-absorbing composition or resin composition having an infrared-absorbing property. Incidentally, the surface temperature of laminated glass can reach 60°C and even higher when a vehicle is left under the hot sun. An increasing laminated glass surface temperature may result in turbidity of the laminated glass and eventually reduce the visible light transmittance. When this occurs, the infrared-absorbing performance is maintained but visibility from inside the vehicle is impaired.

It is an object of the present invention, which has been accomplished in light of the problems described above, to provide an infrared-absorbing composition and resin composition having high visible light transmittance not only at ordinary temperature but also at higher temperatures, while also exhibiting excellent infrared-absorbing performance. It is another object of the invention to provide an interlayer for laminated glass, a laminated body, laminated glass and a building material which can exhibit excellent visibility even with an increased surface temperature.

In order to achieve the aforestated objects, the present inventors conducted much research on the spectral characteristics of compositions comprising copper ion and phosphoric acid ester compounds, and as a result found that the state of turbidity and the visible light transmission at high temperature vary depending on the types and chain lengths of the substituents on the phosphoric acid ester compounds, and on the ratio of phosphoric acid monoesters and phosphoric acid diesters of the phosphoric acid ester compounds. Upon still further detailed investigation it was discovered how it is possible to maintain excellent visible light transmission characteristics without turbidity even at high temperatures, and the present invention was thereupon completed.

Specifically, the infrared-absorbing composition of the present invention comprises a phosphoric acid ester compound including a phosphoric acid monoester represented by formula (1) below and a phosphoric acid diester represented by formula (2) below, and copper ion, wherein the ratio of the phosphoric acid monoester and the phosphoric acid diester is 30:70 to 74:26, as the molar ratio.

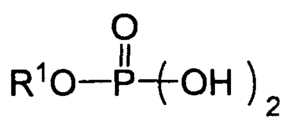 (1)

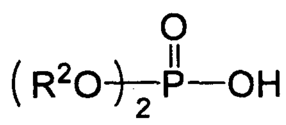 (2)

In the above formulas, $R^1$ and $R^2$ each independently represent an ester bond-containing C4-18 group, a C4-18 alkyl group, a C4-18 alkenyl group or a C4-18 alkynyl group, and the multiple $R^2$ groups may be the same or different.

The resin composition of the invention comprises the aforementioned infrared-absorbing composition and a resin.

The infrared-absorbing composition and resin composition of the invention, having the structure described above, exhibit high visible light transmittance and excellent infrared-absorbing performance not only at ordinary temperature but also at high temperatures. Thus, the resin composition of the invention may be used, for example, as an infrared-absorbing resin composition. It is believed that the aforementioned effect is exhibited primarily because the phosphoric acid ester compound includes the phosphoric acid monoester and phosphoric acid diester in the specified ratio, and because the phosphoric acid ester compound possesses the specified substituents.

Copper ion forms coordination bonds and/or ionic bonds with the phosphate groups in the phosphoric acid ester compound and is surrounded by phosphoric acid ester compounds in the infrared-absorbing composition, or it is dissolved or dispersed in the resin composition. Infrared rays are absorbed by electron transition between d orbitals of the copper ion.

Useful resins include polyvinylacetal-based resin, ethylene-vinyl acetate copolymer or its saponified copolymer. Satisfactory adhesion onto the base can be achieved with resin compositions comprising such resins.

The phosphoric acid ester compound is preferably one wherein $R^1$ and $R^2$ are the same group. Satisfactory compatibility and dispersibility will be achieved if the same group is represented by $R^1$ and $R^2$. The aforementioned alkyl group, alkenyl group or alkynyl group is preferably C6-18, and more preferably, for example, 2-ethylhexyl, 8-methylnonyl, isodecyl or oleyl. The phosphoric acid monoester and phosphoric acid diester ratio is preferably 35:65 to 70:30, as the molar ratio.

A useful proportion of total hydroxyl groups in the phosphoric acid ester compound with respect to copper ion (OH group/Cu ratio) is a molar ratio of 1-6. The copper ion content is preferably 0.1-20 wt% based on the total weight of the infrared-absorbing composition or resin composition. This will allow effective utilization of the peculiar optical characteristics of the copper ion.

An interlayer for laminated glass according to the invention comprises the aforementioned resin composition of the invention. A laminated body according to the invention is a laminated body provided with a layer comprising the resin composition on a base made of a translucent material, where the resin composition is a resin composition of the invention as described above.

Laminated glass according to the invention is laminated glass provided with an interlayer comprising a resin composition between a pair of glass panels, where the resin composition is a resin composition of the invention as described above. A building material according to the invention comprises a molded article from a resin composition of the invention as described above.

Since an interlayer for laminated glass, a laminated body, laminated glass and a building material according to the invention comprise a resin composition of the invention as described above, the visible light transmittance is high and it is possible to selectively absorb light of a specific wavelength range in sunlight. As a result, the interlayer for laminated glass, laminated body, laminated glass and building material of the invention have excellent visibility even with increasing surface temperature, as well as excellent heat ray-cutting efficiency.

The aforementioned resin composition preferably has a visible light transmittance of 70% or greater, and a light transmittance of no greater than 40% for light with a wavelength of 700-1000 nm. The resin composition of the invention is a resin composition containing a polyvinylacetal-based resin, an ethylene-vinyl acetate copolymer or its saponified copolymer, and having a visible light transmittance of 70% or greater and a light transmittance of no greater than 40% for light with a wavelength of 700-1000 nm. This will permit the resin composition of the invention to simultaneously exhibit both excellent visibility and heat ray-cutting efficiency.

The interlayer for laminated glass, laminated body, laminated glass and building material of the invention each also has a visible light transmittance of 70% or greater and a light transmittance of no greater than 40% for light with a wavelength of 700-1000 nm.

The interlayer for laminated glass preferably is composed of a resin composition, and exhibits a visible light transmittance of 70% or greater and a light transmittance of no greater than 40% for light with a wavelength of 700-1000 nm in the thickness direction of the interlayer for laminated glass.

The laminated body preferably is a laminated body comprising a layer composed of a resin composition formed on a base made of a translucent material, and exhibits a visible light transmittance of 70% or greater and a light transmittance of no greater than 40% for light with a wavelength of 700-1000 nm in the thickness direction of the laminated body.

The laminated glass preferably is laminated glass comprising an interlayer composed of a resin composition between a pair of glass panels, and exhibits a visible light transmittance of 70% or greater and a light transmittance of no greater than 40% for light with a wavelength of 700-1000 nm in the thickness direction of the laminated glass.

The building material preferably is a building material composed of a molded sheet of the resin composition, and exhibits a visible light transmittance of 70% or greater and a light transmittance of no greater than 40% for light with a wavelength of 700-1000 nm in the thickness direction of the building material.

The visible light transmittance and the transmittance for light with a wavelength of 700-1000 nm are obtained by measurement at the same location using a spectrophotometer.

The interlayer for laminated glass, laminated body, laminated glass and building material of the invention having

the construction described above can simultaneously exhibit excellent visibility and heat ray-cutting efficiency.

The present invention further provides an infrared-absorbing sheet and infrared-absorbing film characterized by comprising the aforementioned resin composition of the invention, as well as an infrared-absorbing coating characterized by containing the resin composition.

The resin composition may be dissolved or dispersed in a solvent and coated and dried or heat-molded, to easily obtain an infrared-absorbing sheet, infrared-absorbing film or infrared-absorbing coating.

The present invention still further provides an interlayer for laminated glass characterized by comprising the aforementioned infrared-absorbing sheet, infrared-absorbing film or infrared-absorbing coating. The infrared-absorbing sheet, infrared-absorbing film and infrared-absorbing coating exhibit excellent infrared-absorbing properties and visible light transmitting characteristics, and are therefore useful as interlayers for laminated glass.

The invention still further provides a laminated body characterized by comprising a layer made of the aforementioned infrared-absorbing sheet, infrared-absorbing film, infrared-absorbing coating or interlayer for laminated glass, and a base made of a translucent material. The invention yet further provides a laminated body characterized by comprising a layer made of the aforementioned infrared-absorbing sheet, infrared-absorbing film, infrared-absorbing coating or interlayer for laminated glass, formed between at least a pair of bases made of a translucent material. Useful translucent materials include glass and plastic.

This allows the aforementioned laminated body to have high visible light transmittance not only at ordinary temperature but even at high temperatures, as well as excellent infrared-absorbing performance. The laminated body also can exhibit excellent visibility even with increased surface temperature.

## Brief Description of the Drawings

Fig. 1 is a schematic cross-sectional view of an example of a laminated body of the invention.

Fig. 2 is a schematic cross-sectional view of an example of a laminated body of the invention.

Fig. 3 is a schematic cross-sectional view of an example of a laminated body of the invention.

Fig. 4 is a schematic cross-sectional view of an example of a laminated body of the invention.

Fig. 5 is a schematic cross-sectional view of an example of a laminated body of the invention.

Fig. 6 is a schematic cross-sectional view of an example of a laminated body of the invention.

Fig. 7 is a schematic cross-sectional view of an example of a laminated body of the invention.

Fig. 8 is a graph showing an example of spectroscopic measurement results for the resin composition of Example 4.

Fig. 9 is a graph showing an example of spectroscopic measurement results for the infrared-absorbing sheet of Example 11 and the laminated glass of Examples 17-20 and Comparative Examples 6 and 7.

Fig. 10 is an illustration showing an example of an evaluation method for heat ray-cutting performance by the laminated glass of Example 21 and Comparative Examples 8 and 9.

Fig. 11 is an illustration showing another example of an evaluation method for heat ray-cutting performance by the laminated glass of Example 21 and Comparative Examples 8 and 9.

Fig. 12 is an illustration showing another example of an evaluation method for heat ray-cutting performance by the laminated glass of Example 21 and Comparative Examples 8 and 9.

## Best Mode for Carrying Out the Invention

Preferred embodiments of the invention will now be described in detail with reference to the accompanying drawings where necessary. Throughout the drawings, unless otherwise specified, the vertical and horizontal positional relationships are based on the positional relationships in the drawings. The dimensional proportions in the drawings are not restricted to the proportions shown.

(Infrared-absorbing composition)

An infrared-absorbing composition according to this embodiment will be described first. The infrared-absorbing composition comprises a specific phosphoric acid ester compound and copper ion.

The phosphoric acid ester compound mentioned above includes a phosphoric acid monoester represented by formula (1) below and a phosphoric acid diester represented by formula (2) below.

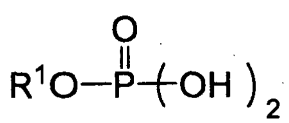

(1)

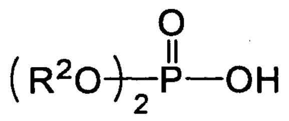 (2)

In the above formulas, $R^1$ and $R^2$ each independently represent a C4-18 alkyl group, a C4-18 alkenyl group or a C4-18 alkynyl group, an oxyalkylene unit-containing C4-18 group (hereinafter referred to as "1st group") or an ester bond-containing C4-18 group (hereinafter referred to as "2nd group"). The multiple $R^2$ groups may be the same or different. Since the phosphoric acid ester compound has specific substituents as $R^1$ and $R^2$, it has satisfactory solubility or dispersibility in media such as solvents or resins when in combination with copper ion. The compatibility and dispersibility in a resin composition will be particularly satisfactory if $R^1$ and $R^2$ are identical groups. The number of carbon atoms of $R^1$ and $R^2$ is 4-18, but it is preferably 6-18 and more preferably 8-18. Less than 4 carbon atoms or more than 18 carbon atoms reduces compatibility with resins.

As alkyl groups there may be mentioned straight-chain, branched and cyclic alkyl groups. As alkenyl groups there may be mentioned straight-chain, branched and cyclic alkenyl groups. As alkynyl groups there may be mentioned straight-chain, branched and cyclic alkynyl groups. Among these are preferred branched alkyl groups, branched alkenyl groups and branched alkynyl groups, and preferred examples include 2-ethylhexyl, 8-methylnonyl and isodecyl. Straight-chain alkenyl groups are also preferred, an example of which is oleyl. Using such substituents, in combination with copper ion, results in excellent visible light transmission characteristics and excellent infrared-absorbing properties not only at ordinary temperature but also at higher temperatures, such as temperatures above 70°C (hereinafter sometimes referred to as "high temperatures").

As the 1st group there may be mentioned groups represented by the following formula (3).

$$R^{11}\left(O-R^{12}\right)_x- \qquad (3)$$

In this formula, $R^{11}$ is a C1-16, preferably C1-10 and more preferably C1-6 alkyl group. If $R^{11}$ is greater than C16, compatibility with resins may be reduced. Also, $OR^{12}$ is an oxyalkylene unit, and as oxyalkylene units there may be mentioned oxyethylene, oxypropylene, oxybutylene, oxypentylene and oxyhexylene units. Among these, one or more from among oxyethylene, oxypropylene and oxybutylene units are preferred.

The oxyalkylene unit may consist of a single type or a plurality of different oxyalkylene units. For example, if the oxyalkylene unit consists of an oxyethylene unit and an oxypropylene unit, the oxyethylene unit and oxypropylene unit may be bonded in block or random form. The number of repeating oxyalkylene units x is preferably 1-7, more preferably 1-5 and even more preferably 1-3. If the number of repeated units x is greater than 7, the moisture resistance of the infrared-absorbing composition will tend to be vastly reduced. For the 1st group, $R^{11}$, the oxyalkylene unit ($OR^{12}$) and x may be appropriately selected for a total number of carbon atoms in the range of 4-18.

The 1st group is preferably a group with an oxypropylene unit represented by formula (4) and formula (5) below. Using this manner of group as the 1st group will yield an infrared-absorbing composition with excellent visible light transmitting characteristics and infrared-absorbing properties even at high temperatures.

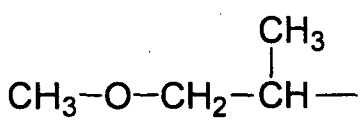 (4)

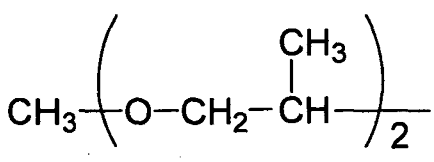 (5)

As the 2nd group there may be mentioned groups represented by the following formulas (6) and (7).

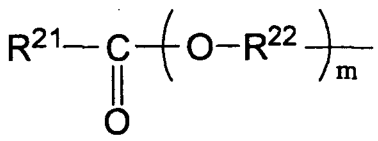

(6)

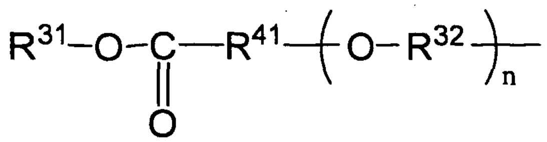

(7)

In these formulas, $R^{21}$ and $R^{31}$ are C1-16, preferably C1-10, more preferably C1-6 and most preferably C1-3 alkyl groups. If $R^{21}$ has more than 16 carbon atoms, compatibility with resins may be reduced. The number of carbon atoms of the alkylene unit represented by $OR^{22}$ and $OR^{32}$ is 1-6, preferably 1-4, more preferably 3-4 and most preferably 3. As such oxyalkylene units there may be mentioned oxymethylene, oxyethylene, oxypropylene, oxybutylene, oxypentylene and oxyhexylene units. Among these, oxypropylene and oxybutylene units are preferred. If the number of carbon atoms of $R^{22}$ and $R^{32}$ exceeds 6, it will be difficult to disperse the phosphoric acid ester compound at a high proportion in the solvent or resin.

$R^{41}$ is an alkylene group, and it has 1-10, preferably 3-6, more preferably 3-4 and most preferably 3 carbon atoms. The letter m of the 2nd group represented by formula (6) above is an integer of 1-6 and preferably 1-3. If the value of m is greater than 6, the moisture resistance of the infrared-absorbing composition will be significantly reduced. On the other hand, if the value of m is 0, it will tend to be difficult to evenly disperse the copper ion in the resin. The letter n of the 2nd group represented by formula (7) above is an integer of 0-5 and preferably 0-2. $R^{21}$, $R^{22}$ and m, and, $R^{31}$, $R^{32}$, $R^{41}$ and n are appropriately selected for a total number of carbon atoms of the 2nd group in the range of 4-18.

As the 2nd group there may be suitably used the group represented by the following formula (8).

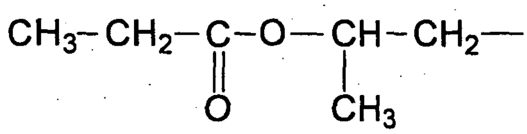

(8)

The phosphoric acid ester compound of this embodiment has a phosphoric acid monoester and phosphoric acid diester ratio of 30:70 to 74:26, but preferably 35:65 to 70:30 and more preferably 40:60 to 65:35, as the molar ratio. If the phosphoric acid monoester proportion is less than 30 mole percent (the phosphoric acid diester proportion exceeds 70 mole percent), the visible light transmittance is reduced at high temperatures. On the other hand, if the phosphoric acid monoester proportion is greater than 74 mole percent (the phosphoric acid diester proportion is less than 26 mole percent), a reaction product with copper ion may be precipitated, thereby reducing the visible light transmittance.

The phosphoric acid ester compound of this embodiment may be obtained by the following methods (i) to (iii):

(i) A method wherein a specific alcohol is reacted with phosphorus pentaoxide either without a solvent or in a suitable organic solvent. The organic solvent used for the reaction is preferably an organic solvent that does not react with phosphorus pentaoxide, such as toluene or xylene. The reaction conditions for the specific alcohol and the phosphorus pentaoxide are a reaction temperature of 0-100°C and preferably 40-80°C, and a reaction time of 1-24 hours and preferably 4-9 hours. In this method, for example, the specific alcohol and phosphorus pentaoxide may be used at a molar ratio of 3:1 to obtain a phosphoric acid monoester/phosphoric acid diester mixture in a (molar) ratio of about 1:1. By appropriate selection of the ratio of the specific alcohol and phosphorus pentaoxide and reaction conditions, it is possible to adjust the phosphoric acid monoester and phosphoric acid diester ratio to a molar ratio in the range of 30:70 to 74:26.

(ii) A method wherein a specific alcohol is reacted with a phosphorus oxyhalide either without a solvent or in a suitable organic solvent, and water is added to the obtained product for hydrolysis. An example of a suitable phosphorus oxyhalide for use is phosphorus oxychloride. The organic solvent used for the reaction between the specific alcohol and

the phosphorus oxyhalide is preferably an organic solvent that does not react with the phosphorus oxyhalide, such as toluene or xylene. The reaction conditions for the specific alcohol and the phosphorus oxyhalide are a reaction temperature of 0-110°C and preferably 40-80°C, and a reaction time of 1-20 hours and preferably 2-8 hours.

In this method, for example, the specific alcohol and phosphorus oxyhalide may be used at a molar ratio of 1: 1 to obtain a phosphoric acid monoester compound. As the reaction catalyst there may be used a Lewis acid catalyst such as aluminum chloride ($AlCl_3$), and as a catcher for hydrochloric acid by-product there may be used bases such as triethylamine and pyridine. Using such a reaction catalyst and hydrochloride catcher can yield a phosphoric acid monoester/phosphoric acid diester mixture. Moreover, by appropriate selection of the ratio of the specific alcohol and phosphorus oxyhalide and reaction conditions, it is possible to adjust the phosphoric acid monoester and phosphoric acid diester ratio to a molar ratio in the range of 30:70 to 74:26.

(iii) A method wherein a specific alcohol is reacted with a phosphorus trihalide either without a solvent or in a suitable organic solvent to synthesize a phosphonic acid ester compound, and then the obtained phosphonic acid ester compound is oxidized. An example of a suitable phosphorus trihalide for use is phosphorus trichloride. As suitable organic solvents there may be used hexane and heptane. The reaction conditions for the specific alcohol and the phosphorus trihalide are a reaction temperature of 0-90°C and preferably 40-75°C, and a reaction time of 1-10 hours and preferably 2-5 hours. As the means for oxidizing the phosphonic acid ester compound, there may be used a procedure in which a halogen such as chlorine gas is reacted with the phosphonic acid ester compound to synthesize a phosphorohaloridate compound, and the phosphorohaloridate compound is hydrolyzed. The reaction temperature for the phosphonic acid ester compound and the halogen is preferably 0-40°C and more preferably 5-25°C.

The phosphonic acid ester compound may be purified by distillation before its oxidation. In this method, for example, the specific alcohol and phosphorus trihalide may be used at a molar ratio of 3:1 to obtain a phosphoric acid diester compound at a high purity. By appropriate selection of the ratio of the specific alcohol and phosphorus trihalide and reaction conditions, it is possible to obtain a phosphoric acid monoester/phosphoric acid diester mixture. The phosphoric acid monoester and phosphoric acid diester ratio is adjusted to a molar ratio in the range of 30:70 to 74:26.

As specific preferred examples of phosphoric acid ester compounds obtained by methods (i) to (iii) there may be mentioned compositions represented by formulas (9)-a and (9)-b, formulas (17)-a and (17)-b, formulas (11)-c and (11)-d and formulas (14)-c and (14)-d below. In the formulas shown below, a and c represent phosphoric acid monoesters while b and d represent phosphoric acid diesters. These phosphoric acid ester compounds are adjusted so that the phosphoric acid monoester and phosphoric acid diester ratios are molar ratios in the range of 30:70 to 74:26. For adjustment of the phosphoric acid monoester and phosphoric acid diester to the aforementioned specified ratio, the phosphoric acid ester compound may be one comprising a phosphoric acid monoester and phosphoric acid diester wherein $R^1$ and $R^2$ are identical groups (for example, phosphoric acid ester compounds represented by formulas (9)-a and (9)-b below), or a phosphoric acid ester compound comprising a phosphoric acid monoester and phosphoric acid diester wherein $R^1$ and $R^2$ are different groups (for example, phosphoric acid ester compounds represented by formulas (9)-a and (10)-b below).

Also, it may be a phosphoric acid ester compound comprising a phosphoric acid monoester and phosphoric acid diester including the same and different groups for $R^1$ and $R^2$ (for example, phosphoric acid ester compounds represented by formulas (9)-a and (9)-b below and formulas (10)-a and (10)-b below). When reacting copper ion with a phosphoric acid ester compound comprising a phosphoric acid monoester and phosphoric acid diester wherein $R^1$ and $R^2$ are different groups, solubility will sometimes be reduced due to the three-dimensional structure of the phosphoric acid ester-copper compound yielded as the reaction product, resulting in precipitation of the phosphoric acid ester-copper compound. The phosphoric acid ester compound therefore preferably includes a phosphoric acid monoester and phosphoric acid diester wherein $R^1$ and $R^2$ are the same group. From the standpoint of improving the infrared-absorbing property and the visible light transmission characteristic at high temperatures, it is preferred to select, among the specifically mentioned phosphoric acid ester compounds, phosphoric acid ester compounds represented by the following formulas (13)-a and (13)-b, the following formulas (14)-a and (14)-b or (14)-c and (14)-d.

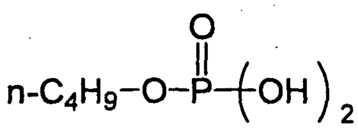 (9)-a

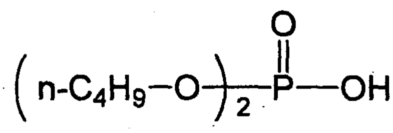 (9)-b

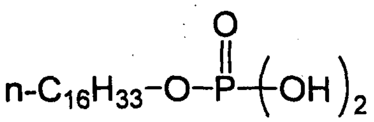 (10)-a 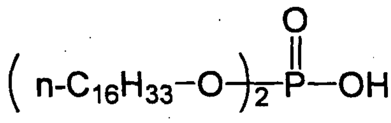 (10)-b

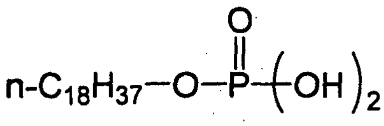 (11)-a 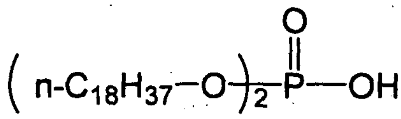 (11)-b

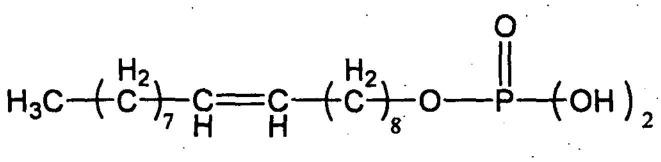 (11)-c

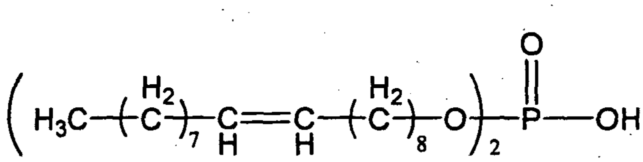 (11)-d

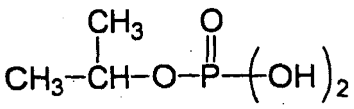 (12)-a 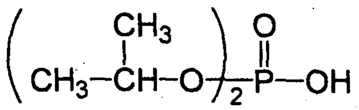 (12)-b

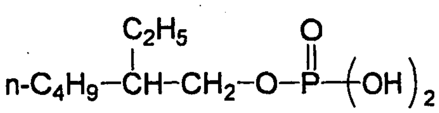 (13)-a 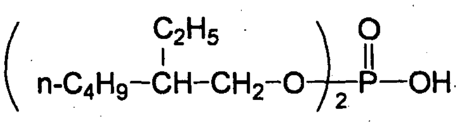 (13)-b

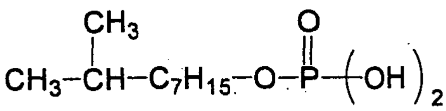 (14)-a 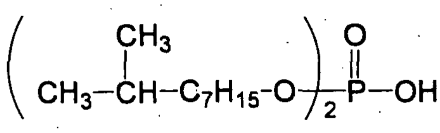 (14)-b

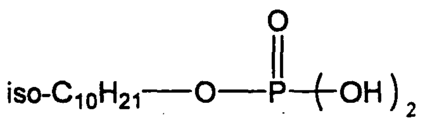 (14)-c 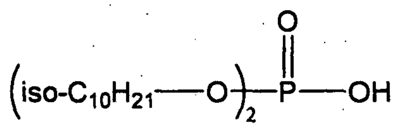 (14)-d

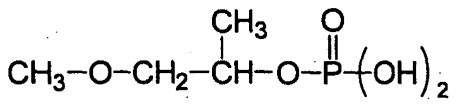 (15)-a 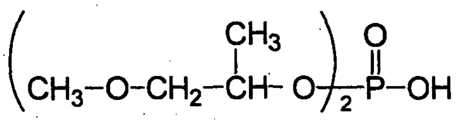 (15)-b

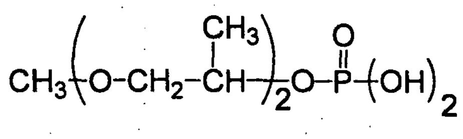 (16)-a 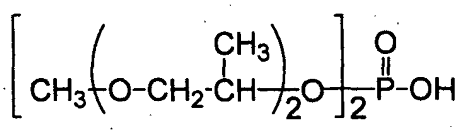 (16)-b

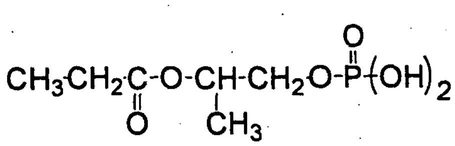 (17)-a 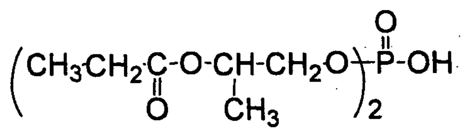 (17)-b

(Copper ion)
The copper ion may be supplied from a copper salt. As specific examples of copper salts there may be mentioned anhydrates, hydrates or hydroxides of organic acid copper salts such as copper acetate, copper formate, copper stearate, copper benzoate, copper ethylacetoacetate, copper pyrophosphate, copper naphthenate and copper citrate, or anhydrates, hydrates or hydroxides of inorganic acid copper salts such as copper chloride, copper sulfate, copper nitrate and basic copper carbonate, as well as copper hydroxide. Among these, there are preferably used copper acetate, copper acetate monohydrate, copper benzoate, copper hydroxide and basic copper carbonate. For this embodiment, metal ions other than copper ion may be included so long as the main component is copper ion. Here, "the main component is copper ion" means that copper ion constitutes at least 50 wt% and preferably at least 70 wt% of the total metal ion weight. This will allow the infrared-absorbing composition to effectively exhibit the optical characteristics peculiar to copper ion.

As metal ions other than copper ion there may be mentioned ions of metals such as rare earth metals, sodium, potassium, lithium; calcium, strontium, iron, manganese, magnesium, nickel, chromium, indium, titanium, antimony and tin. Examples of rare earth metals include neodymium, praseodium and holmium. Such rare earth metals have excellent absorption properties for light of a specific wavelength (near 580 nm and near 520 nm) due to electron transition between f orbitals of the rare earth metal ion, and since this wavelength region matches the maximum response wavelength of photoreceptor cells in the human eye, it is possible to confer an anti-glare property to the infrared-absorbing composition.

As explained above, the infrared-absorbing composition of this embodiment contains a phosphoric acid ester compound and copper ion, but it may also contain a phosphoric acid ester-copper compound obtained by reaction between the phosphoric acid ester compound and a copper compound. The copper compound used may be any of the copper salts mentioned above. The reaction between the phosphoric acid ester compound and the copper salt is conducted by contacting them under appropriate conditions. Specifically, the following methods (iv), (v) and (vi) may be employed.

(iv) A method of mixing the phosphoric acid ester compound and copper salt together and reacting them.

(v) A method of reacting the phosphoric acid ester compound and copper salt in a suitable organic solvent.
(vi) A method of contacting an organic solvent layer comprising the phosphoric acid ester compound in an organic solvent with an aqueous layer in which the copper salt is dissolved or dispersed, for reaction between the phosphoric acid ester compound and copper salt.

The reaction conditions for the phosphoric acid ester compound and copper salt in method (iv) above are preferably a reaction temperature of 0-150°C and preferably 40-100°C, and a reaction time of 0.5-10 hours and preferably 1-7 hours.

The organic solvent used for method (v) above is not particularly restricted so long as it can dissolve the phosphoric acid ester compound used. As examples of organic solvents there may be mentioned aromatic compounds such as benzene, toluene and xylene, alcohols such as methyl alcohol, ethyl alcohol and isopropyl alcohol, glycol ethers such as methyl cellosolve and ethyl cellosolve, ethers such as diethyl ether, diisopropyl ether and dibutyl ether, ketones such as acetone and methyl ethyl ketone, esters such as ethyl acetate, as well as hexane, kerosene and petroleum ether. There may also be used polymerizable organic solvents include (meth)acrylic acid esters such as (meth)acrylates, and aromatic vinyl compounds such as styrene and α-methylstyrene.

The organic solvent used for method (vi) above, on the other hand, is not particularly restricted so long as it is insoluble or poorly soluble in water and can dissolve or disperse the phosphoric acid ester compound used. Examples of such organic solvents, among the organic solvents to be used for method (v) for example, include aromatic compounds, ethers, esters, hexane, kerosene, (meth)acrylic acid esters and aromatic vinyl compounds.

When an acid salt is used as the copper salt, the acid component is released as an anion from the copper salt during the reaction between the phosphoric acid ester compound and the copper salt. The acid component can lead to reduced moisture resistance and heat stability of the resin composition when the resin composition has the phosphoric acid ester compound dissolved or dispersed in a resin, and it is preferably removed as necessary. When the phosphoric acid ester-copper compound is produced by method (iv) or (v) above, reaction between the phosphoric acid ester compound and the copper salt is preferably followed by removal of the generated acid component (or the generated acid component and the organic solvent, in the case of method (v)) by distillation.

For production by method (vi) above, the preferred procedure for removal of the acid component is a method of adding an alkali to the organic solvent layer comprising the phosphoric acid ester compound in the organic solvent which is insoluble or poorly soluble in water, for neutralization, and then contacting the organic solvent layer with an aqueous layer in which the copper salt is dissolved or dispersed, for reaction between the phosphoric acid ester compound and the copper salt, and finally separating the organic solvent layer and aqueous layer.

As alkalis there may be mentioned sodium hydroxide, potassium hydroxide and ammonia, but there is no limitation to these. According to this method, a water-soluble salt is formed by the alkali and the acid component released from the copper salt. This salt migrates to the aqueous layer while the generated phosphoric acid ester-copper compound migrates to the organic solvent layer. Thus, separation of the aqueous layer and the organic solvent layer allows removal of the acid component.

As specific preferred examples of phosphoric acid ester-copper compounds obtained by the methods of (iv) to (vi) above there may be mentioned those including a phosphoric acid monoester-copper compound derived from a phosphoric acid monoester represented by formula (19)-a below and a phosphoric acid diester-copper compound derived from a phosphoric acid diester represented by formula (19)-b below. There are no particular restrictions on the structure of the phosphoric acid ester-copper compound. The molar ratio of the phosphoric acid monoester-copper compound and phosphoric acid diester-copper compound of the phosphoric acid ester-copper compound is in the range of 30:70 to 74-26.

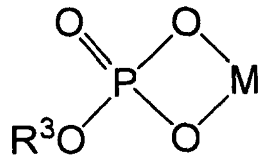

(19)-a

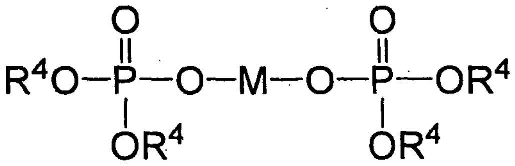 (19)-b

In these formulas, $R^3$ and $R^4$ each independently represent a C4-18 alkyl group, a C4-18 alkenyl group, a C4-18 alkynyl group, an oxyalkylene unit containing C4-18 group or an ester bond containing C4-18 group, and M represents copper ion. The multiple $R^4$ groups may be the same or different.

As preferred substituents for the $R^3$ group in the phosphoric acid monoester-copper compound represented by formula (19)-a above there may be mentioned the same substituents as for $R^1$ of the phosphoric acid monoester represented by general formula (1) above. Also, as preferred substituents for the $R^4$ group in the phosphoric acid diester-copper compound represented by general formula (19)-b above there may be mentioned the same substituents as for $R^2$ of the phosphoric acid diester represented by general formula (2) above.

The ratio of total hydroxyl groups in the phosphoric acid ester compound with respect to copper ion (OH group/Cu) is preferably 1-6, more preferably 1-4 and even more preferably 1.5-2.5, as the molar ratio. If the copper ion proportion is less than 1, it becomes difficult to disperse the phosphoric acid ester compound in the resin, and the infrared-absorbing performance and visible light transmission at high temperatures will tend to be insufficient. On the other hand, if the copper ion proportion is greater than 6, an excessive number of hydroxyl groups will be present that do not participate in coordination bonding and/or ion bonding with the copper ion, and a composition with such a ratio will tend to have a relatively high moisture absorption property.

(Resin composition)

The resin composition of this embodiment will now be explained. The resin composition comprises the aforementioned infrared-absorbing composition and a resin. The resin used is preferably a synthetic resin with excellent transparency. As specific examples there may be mentioned vinyl chloride-based resins, acrylic-based resins, polycarbonate-based resins, polyester-based resins, polyolefin-based resins, norbornene-based resins, polyurethane-based resins, polyvinylacetal-based resins, ethylene-vinyl acetate copolymers and their saponified forms. These synthetic resins may be used alone or in combinations of two or more. Of these, there are preferred for use one or more selected from among polyvinylacetal-based resins such as polyvinylbutyral, ethylene-vinyl acetate-based copolymers, and their saponified forms, because of their high adhesion for glass and plastic material constituents of translucent materials as described below.

Plasticizers with excellent compatibility with resins may sometimes be used in the aforementioned resin composition. As such plasticizers there may be mentioned phosphoric acid ester-based plasticizers, phthalic acid-based plasticizers, fatty acid-based plasticizers and glycol-based plasticizers, and as more specific examples there may be mentioned triethyleneglycol di-2-ethylhexanoate (3GO), triethyleneglycol di-2-ethylbutyrate (3GH), dihexyl adipate (DHA), tetraethyleneglycol diheptanoate (4G7), tetraethyleneglycol di-2-ethylhexanoate (4GO) and triethyleneglycol diheptanoate (3G7). These may be used alone or in combinations of two or more.

When the phosphoric acid ester compound and copper ion are added to a resin to form a resin composition, the copper ion content is preferably 0.1-20 wt%, more-preferably 0.3-15 wt% and even more preferably 0.5-7 wt% based on the total weight of the resin composition. If the content is less than 0.1 wt%, the infrared-absorbing property will tend to be insufficient. On the other hand, if the proportion is greater than 20 wt% it will tend to be difficult to disperse the copper ion in the resin.

The content of other metal ions is preferably no greater than 50 wt%, more preferably no greater than 30 wt% and even more preferably no greater than 20 wt% based on the total metal ion weight. If the content is greater than 50 wt%, the coordination bond between the copper ion and phosphoric acid ester compound will be affected by the other metal ions, which will tend to make it difficult to obtain a resin composition with a high infrared-absorbing property.

The aforementioned infrared-absorbing composition and resin composition have a transmittance of 70% or greater for visible light, and a transmittance of no greater than 40% for light with a wavelength of 700-1000 nm. The resin composition according to another embodiment is a resin composition containing a resin comprising a polyvinylacetal-based resin or an ethylene-vinyl acetate copolymer or its saponified copolymer, and having a transmittance of 70% or greater for visible light and a transmittance of no greater than 40% for light with a wavelength of 700-1000 nm. The "transmittance" can be measured using a spectrophotometer (U-4000, product of Hitachi Laboratories Co., Ltd.), for the resin composition shaped into a sheet form with a thickness of 1.0 mm and a uniform surface at 30 mmφ. This will yield an infrared-absorbing composition and resin composition exhibiting excellent infrared-absorbing properties and visible light transmission characteristics.

The haze of the infrared-absorbing composition or resin composition at 70°C is preferably no greater than 70%, more preferably no greater than 50% and even more preferably no greater than 40%. If the haze exceeds 70%, the visible light transmission characteristics at high temperature will be insufficient. The infrared-absorbing composition or resin composition also has an ΔH value represented by the following formula (20) of preferably no greater than 45%, more preferably no greater than 35% and even more preferably no greater than 20%. If ΔH exceeds 45%, the visible light transmission characteristics at high temperature will be insufficient.

$$|H_{70}-H_{25}| \leq \Delta H\% \qquad (20)$$

In this formula, $H_{70}$ represents the haze of the infrared-absorbing composition or resin composition at 70°C, and $H_{25}$ represents the haze of the infrared-absorbing composition or resin composition at 25°C. The "haze" is measured using a turbidimeter (NDH-1001DP, product of NDK, Inc.) conforming to JIS K 7136, with the infrared-absorbing composition or resin composition shaped into a sheet form with a thickness of 1.0 mm and a uniform surface at 30 mmφ.

(Infrared-absorbing sheet, infrared-absorbing film and infrared-absorbing coating)

An infrared-absorbing sheet, infrared-absorbing film and infrared-absorbing coating according to this embodiment is composed of the aforementioned resin composition. The infrared-absorbing coating may comprise a composition containing copper ion and a phosphoric acid ester compound.

An infrared-absorbing sheet in this case is a thin sheet form having a thickness of 250 μm or greater produced by melting and, for example, extrusion molding of the aforementioned resin composition. An infrared-absorbing film is a thin film form having a thickness of 5-250 μm produced by melting and, for example, draw molding of the aforementioned resin composition. An infrared-absorbing coating is a thin-film, covering or thin-layer formed on all or part of a surface, by coating on the surface a solution or dispersion of a composition containing copper ion and a phosphoric acid ester compound or the aforementioned resin composition dissolved or dispersed in an appropriate solvent, and evaporating off the solvent. Suitable means for producing an infrared-absorbing sheet or infrared-absorbing film include melt extrusion molding, calender molding, press molding and solution cast molding. The infrared-absorbing sheet, infrared-absorbing film or infrared-absorbing coating exhibits excellent infrared-absorbing properties and visible light transmission characteristics. A dissolution aid or the like may also be used as an additive for increased solubility and dispersibility of the resin composition in the solvent, or for increased flatness on the infrared-absorbing coating side, i.e. on the thin-film formed side. Such an additive may also be any of various surfactants used as leveling agents and antifoaming agents.

(Interlayer for laminated glass)

An interlayer for laminated glass according to this embodiment is composed of the aforementioned infrared-absorbing composition, resin composition, infrared-absorbing sheet, infrared-absorbing film or infrared-absorbing coating. Such an interlayer for laminated glass therefore exhibits the property which is characteristic of copper ion, whereby infrared rays are absorbed while light in the visible region (visible light) is not absorbed. Also, since the interlayer for laminated glass is composed of the infrared-absorbing, composition or resin composition, it can exhibit the property of visible light transmittance of 70% or greater, and transmittance of no greater than 40% for light with a wavelength of 700-1000 nm. An interlayer for laminated glass according to another embodiment also exhibits the property of visible light transmittance of 70% or greater, and transmittance of no greater than 40% for light with a wavelength of 700-1000 nm. This allows the interlayer for laminated glass to simultaneously exhibit excellent infrared-absorbing performance and visible light transmitting performance.

The interlayer for laminated glass preferably has a thickness of 0.001-10 mm, and especially 0.01-5 mm. If the thickness of the interlayer for laminated glass is less than 0.001 mm it will be difficult to obtain an interlayer with a high infrared-absorbing property, and the infrared-absorbing property of the laminated glass will therefore be inadequate. On the other hand, if the thickness of the interlayer for laminated glass is greater than 10 mm, it will be difficult to obtain an interlayer with high transmittance for visible light, and the visible light transmittance of the laminated glass will therefore be low.

(Laminated body)

Figs. 1 to 5 are schematic cross-sectional views of examples of laminated bodies according to this embodiment. Figs. 1 to 3 show a first mode of a laminated body of this embodiment. This type of laminated body is provided with a sheet-like member 1 (base made of a translucent material) and a layer made of the aforementioned infrared-absorbing composition or resin composition (hereinafter referred to as "infrared-absorbing composition layer") 2. Figs. 4 to 5 show a second mode of the laminated body of this embodiment. This type of laminated body is provided with an infrared-absorbing composition layer 2 between a pair of sheet-like members 1 (bases made of a translucent material). These laminated bodys has the sheet-like members 1 and the infrared-absorbing composition layer 2 integrated, and it may be used, for example, as an infrared-absorbing composite such as a window material.

The laminated bodies shown in Figs. 1 to 5 are window materials. The window glass 10 shown in Fig. 1 is

provided with the infrared-absorbing composition layer 2 on the sheet-like member 1 (base). This window material 10 can be suitably used as single-layer glass or its base material, or as a one layer in laminated glass or a one layer in multiple glass. The window material 10 having this construction may be formed by coating the infrared-absorbing composition or resin composition (for example, an infrared-absorbing coating) on one side of the sheet-like member 1. The window material 10 may also be formed by attaching an infrared-absorbing sheet, infrared-absorbing film or interlayer for laminated glass onto one side of the sheet-like member 1.

The window material 20 shown in Fig. 2 has an infrared-absorbing composition layer 2 formed on one side of the sheet-like member 1, and the infrared-absorbing composition layer 2 also formed on the other side of the sheet-like member 1. This window material 20 can be suitably used as single-layer glass or its base material, or as a one layer in laminated glass or a one layer in multiple glass, similar to the window material 10.

The window material 30 shown in Fig. 3 has a construction similar to the window material 10 shown in Fig. 1, except that an infrared-absorbing composition layer 2 is formed on the infrared-absorbing composition layer 2. This window material 30 can be suitably used as single-layer glass or its base material, or as a one layer in laminated glass or a one layer in multiple glass, similar to the window material 10.

The window material 40 shown in Fig. 4 is an integrated body having an infrared-absorbing composition layer 2, infrared-absorbing composition layer 2 and sheet-like member 1 laminated in that order on a sheet-like member 1. This window material 40 is a preferred mode for the laminated glass described hereunder. In Fig. 4, the two infrared-absorbing composition layers 2 function as interlayers (intervening layers) for the two sheet-like members 1.

The window material 50 shown in Fig. 5 is an integrated body having an infrared-absorbing composition layer 2, sheet-like member 1 and infrared-absorbing composition layer 2 laminated in that order on a sheet-like member 1. This window material 40 is also a preferred mode for the laminated glass described hereunder. In Fig. 5, one infrared-absorbing composition layer 2 functions as an interlayer (intervening layer) for two sheet-like members 1.

The laminated bodies described above exhibit the infrared-absorbing property which is characteristic of copper ion, while not absorbing visible light, due to the absence of energy levels corresponding to wavelengths in the visible light region (visible light). Thus, the laminated bodies of these embodiments have excellent visible light transmitting characteristics even with increased surface temperature. In other words, the laminated bodies can exhibit visible light transmittance of 70% or greater and transmittance of no greater than 40% for light with a wavelength of 700-1000 nm. Laminated bodies according to another embodiment also exhibit visible light transmittance of 70% or greater and transmittance of no greater than 40% for light with a wavelength of 700-1000 nm. Thus, the laminated bodies can simultaneously exhibit excellent visible light transmitting performance and infrared-absorbing performance. They can therefore be suitably used as show window and showcase window materials, tent or tent window materials, blinds, skylight and window materials for fixed housings or temporary housings, and window materials for vehicles such as automobiles, ships, aircraft and electric trains (railroad cars). Such window materials may be in the form of single-layer glass, laminated glass or multiple glass.

The aforementioned infrared-absorbing composition layer 2 may also comprise a resin composition containing the aforementioned phosphoric acid ester compound and a rare earth ion (anti-glare composition). By producing a window material having such a construction it is possible to exhibit excellent anti-glare properties in addition to the aforementioned visible light transmitting properties and infrared-absorbing characteristics.

Alternatively, the window material described above may be provided with a layer composed of an anti-glare composition containing a phosphoric acid ester compound and a rare earth ion (hereinafter referred to as anti-glare composition layer). As examples of such window materials there may be mentioned a window material having an infrared-absorbing composition layer 2 and an anti-glare composition layer laminated in that order on a sheet-like member 1, a window material having an anti-glare composition layer and an infrared-absorbing composition layer 2 laminated in that order on a sheet-like member 1, and a window material having an infrared-absorbing composition layer 2, an anti-glare composition layer and an infrared-absorbing composition layer 2 laminated in that order on a sheet-like material 1.

The material used to form the sheet-like member 1 is not particularly limited so long as it is a translucent material having a visible light transmitting property, and it may be appropriately selected depending on the purpose of the laminated body. From the standpoint of hardness, heat resistance, chemical resistance and durability, it is preferred to use glass or plastic as explained above. Glass includes inorganic glass and organic glass. Plastic includes, for example, polycarbonate, acrylonitrile-styrene copolymer, polymethyl methacrylate, vinyl chloride-based resins, polystyrene, polyester, polyolefin, norbomene-based resins and the like. When a plurality of sheet-like members 1 are present, each of the sheet-like members 1 may be composed of the same type of material, or they may be composed of different materials.

When the infrared-absorbing composition or resin composition is used as an infrared-absorbing composition layer 2, there may be used mixing means such as a Henschel mixer, or kneading and mixing means such as a roll kneader or kneading extruder. There may be used, instead, means for dispersing each component in an appropriate organic solvent and removing the organic solvent from the dispersion.

When the aforementioned infrared-absorbing sheet, infrared-absorbing film, infrared-absorbing coating or interlayer for laminated glass is used as the infrared-absorbing composition layer 2, the means for attachment thereof to

the sheet-like member 1 may be means of attachment by pressurization or pressure reduction using a press method, multiroll method or reduced pressure method, means of attachment by heating using an autoclave or the like, or means involving a combination of these.

A reflection-attenuating layer or anti-reflection layer may also be provided on at least one side of the sheet-like member 1 of the laminated body. The reflection-attenuating layer or anti-reflection layer may be formed using a publicly known material composed of an inorganic oxide, inorganic halide or the like, by a publicly known method such as vacuum vapor deposition, ion plating, sputtering or the like. The sheet-like member 1 may also be one having the function of selective absorption and/or reflection of a specific wavelength. For example, there may be mentioned members having a selective light-absorbing property such as metal ion introduced glass or dye mixed plastic, or one imparted with a selective light-reflecting property by the above-mentioned method of fabricating a reflection-attenuating layer, or a similar method. If necessary, a visible light absorber which absorbs visible light of a specific wavelength, such as a metal ion-containing component including cobalt ion which selectively absorbs wavelengths of 500-600 nm, or other additives, may be combined with the resin composition.

(Laminated glass)

Laminated glass according to this embodiment may be mentioned as an example of the aforementioned laminated body. Laminated glass comprises the aforementioned interlayer for laminated glass formed between a pair of glass panels. Laminated glass according to another embodiment exhibits a visible light transmittance of 70% or greater and a light transmittance of no greater than 40% for light with a wavelength of 700-1000 nm. This allows the laminated glass to simultaneously exhibit excellent visible light transmitting performance and infrared-absorbing performance. The method of fabricating such laminated glass may be a method of inserting an interlayer (interlayer for laminated glass) comprising the aforementioned infrared-absorbing composition or resin composition which are also adhesive, between two glass panels, subjecting the obtained laminated body to pre-contact bonding to eliminate the air remaining between each layer, and then thoroughly bonding the laminated body by main contact bonding. The interlayer used in this case must not causing blocking phenomenon, i.e. the interlayer must not coalesce into lumps during periods of storage, must have satisfactory workability for stacking of the glass and interlayer, and must have a satisfactory deairing property for the pre-contact bonding step. The deairing property during the pre-contact bonding governs the quality of the laminated glass, and insufficient deairing can lead to poor transparency of the obtained laminated glass and generation of air bubbles in acceleration testing.

The overall performance of the interlayer described above will depend on the type of thermoplastic resin used as the material, as well as its physical properties such as viscoelasticity, but assuming that these factors are consistent, the surface shape of the interlayer will be the major factor determining the overall performance. In particular, an effect may be achieved by forming numerous fine irregularities called embossing on the interlayer surface, and embossed-surface interlayers have been used in the prior art. The form of embossing may be, for example, any of various irregularity patterns formed by multiple hills and multiple valleys between the hills, any of various irregularity patterns formed by multiple raised areas and multiple grooves between the raised areas, or embossed forms having a variety of values for the different shape factors such as roughness, positioning and size. The method used to form the embossing may be, for example, a method of altering the sizes of the hills or specifying the sizes and positions, as described in Japanese Unexamined Patent Publication HEI No. 6-198809, a method of producing a surface roughness of 20-50 μm as described in Japanese Unexamined Patent Publication HEI No. 9-40444, a method of situating raised areas into a crossed pattern as described in Japanese Unexamined Patent Publication HEI No. 9-295839, or a method of forming small hills on primary hills such as described in Japanese Unexamined Patent Publication No. 2003-48762.

A sound insulating property may be required for laminated glass, depending on the purpose of use. The sound insulating performance is generally represented as transmission loss in response to changes in frequency, and the transmission loss is based on fixed values for the sound insulation rating at 500 Hz and greater according to JIS A 4708. However, the sound insulating performance of a glass panel is notably reduced by the coincidence effect in the frequency range centered around 2000 Hz. The coincidence effect is a phenomenon wherein sound waves incident to the glass panel propagate as transverse waves in the glass panel due to the rigidity of the glass panel and inertia, and the transverse waves resonate with the incident sound waves resulting in transmission of sound. In ordinary laminated glass, reduction in the sound insulating performance due to this coincidence effect has been unavoidable for the frequency range centered around 2000 Hz, and therefore improvement has been desired in this aspect.

On the other hand, it is known that the human auditory sense is highly sensitive in a range of 1000-6000 Hz compared to other frequency ranges, as represented by equal-loudness contours. Thus, eliminating breakdown of sound insulating performance due to the coincidence effect is clearly important for achieving increased soundproof performance. In order to increase the sound insulating performance of laminated glass, therefore, it is necessary to mitigate the reduction in sound insulating performance due the coincidence effect, and prevent reduction in local areas of transmission loss (the local areas of transmission loss will hereinafter be abbreviated as TL) resulting from the coincidence effect.

The method for conferring a sound insulating property to the laminated glass may be a method of increasing the mass of the laminated glass, a method of compounding the glass, a method of fragmenting the glass area or a

method of improving the glass panel support means. Since the sound insulating performance is also affected by the dynamic viscosity of the interlayer, and in particular is affected by the loss tangent which is the ratio between the storage elastic modulus and the loss elastic modulus, this value can be controlled to increase the sound insulating performance of the laminated glass. As examples of control means there may be mentioned a method using a resin film with a specified degree of polymerization, a method of specifying the structure of the acetal portion of the polyvinylacetal resin as described in Japanese Unexamined Patent Publication HEI No. 4-2317443, or a method of specifying the amount of plasticizer in the resin as described in Japanese Unexamined Patent Publication No. 2001-220183. In addition, two or more different resins may be combined to increase the sound insulating performance of the laminated glass across a wide temperature range. For example, there may be mentioned the method of blending multiple resins described in Japanese Unexamined Patent Publication No. 2001-206742, the methods of laminating multiple resins described in Japanese Unexamined Patent Publication No. 2001-206471 and Japanese Unexamined Patent Publication No. 2001-226152, and the method of producing deviations in the amount of plasticizer in the interlayer, as described in Japanese Unexamined Patent Publication No. 2001-192243.

Also, for increase in the heat-insulating property of the laminated glass, oxide fine particles having a heat-insulating function can be added to the interlayer, and for example, there may be mentioned the methods described in Japanese Unexamined Patent Publication No. 2001-206743, Japanese Unexamined Patent Publication No. 2001-261383 and Japanese Unexamined Patent Publication No. 2001-302289. As oxide fine particles there may be mentioned tin-doped indium oxide (ITO), antimony-doped tin oxide (ATO) and aluminum-doped zinc oxide (AZO). In order to increase the translucency of the interlayer there may be employed a method of reducing the particle sizes of the oxide fine particles (Japanese Unexamined Patent Publication No. 2002-293583), or increasing the degree of dispersion thereof. The degree of dispersion of the fine particles can be increased by a known fine particle dispersion technique involving mechanical dispersion or the use of a dispersing agent. As an alternative to oxide fine particles, there may be mentioned a method of using an organic dye with a heat-insulating function as described in Japanese Unexamined Patent Publication HEI No. 7-157344 and Japanese Patent Publication No. 319271.

The method of increasing the heat-insulating property of the laminated glass may also be a method of fabricating the laminated glass using glass with a heat-insulating function. For example, there may be mentioned a method of using Fe containing glass (for example, green glass) as described in Japanese Unexamined Patent Publication No. 2001-151539 and a method of using a metal- or metal oxide-laminated glass panel as described in Japanese Unexamined Patent Publication No. 2001-261384 and Japanese Unexamined Patent Publication No. 2001-226148.

The laminated glass of the embodiment described above thus exhibits the property of blocking near-infrared rays (heat) due to absorption of light rays in the near-infrared region by a near-infrared absorbing material in the interlayer, but the laminated glass (laminated body) of the invention may further include a layer with a near-infrared light-reflecting property (reflective layer) in addition to a near-infrared absorbing layer, for the purpose of improving the near-infrared light-blocking property.

Fig. 6 is a schematic cross-sectional view of an example of a laminated body of the invention. This laminated body is a window material 60 such as laminated glass having a reflective layer, for example. The window material 60 has a structure provided with a sheet-like member 1, an infrared-absorbing composition layer 2, a reflective layer 23 and a sheet-like member 1 in that order. The sheet-like member 1 and infrared-absorbing composition layer 2 may be the same types as in the window material 10 described above.

The reflective layer 23 may be a layer composed of a metal or metal oxide, and specific examples include simple metals, alloys, mixtures or oxides of gold, silver, copper, tin, aluminum, nickel, palladium, silicon, chromium, titanium, indium and antimony.

A window material 60 having such a reflective layer 23 may be produced in the following manner, for example. Specifically, first a reflective layer 23 is provided on one side of a sheet-like member 1. The method of forming the reflective layer 23 on the sheet-like member 1 may be a method wherein the metal or metal oxide is vapor deposited on the sheet-like member 1. Next, the sheet-like member 1 having the reflective layer 23 formed thereon is placed on one side of a sheet serving as the infrared-absorbing composition layer 2 with the reflective layer 23 in contact therewith, while only a sheet-like member 1 is placed on the other side. These are contact bonded to obtain a window material 6.

Incidentally, when a reflective layer 23 is formed between a sheet-like member 1 and an infrared-absorbing composition layer 2 in this manner, adhesion between the reflective layer 23 and the infrared-absorbing composition layer 2 will sometimes be reduced. When this occurs, damage to the window material 60 can cause detachment and fly-off of the sheet-like member 1, thus creating a problem in terms of safety. From the standpoint of avoiding this problem, it is preferred to further provide between the infrared-absorbing composition layer 2 and the reflective layer 23 a layer which increases the adhesion of both. This will help to improve adhesion between the reflective layer 23 and the infrared-absorbing composition layer 2. When the resin component in the infrared-absorbing composition layer 2 is a polyvinylacetal, for example, the means for adjusting the adhesive force may be a method of forming a layer comprising a polyvinylacetal having a higher acetalation degree than the infrared-absorbing composition layer 2 (Japanese Unexamined Patent Publication HEI No. 7-187726, Japanese Unexamined Patent Publication HEI No. 8-337446), a layer comprising PVB having a prescribed proportion of acetoxy groups (Japanese Unexamined Patent Publication HEI No. 8-337445) or a layer comprising a prescribed silicon oil (Japanese Unexamined Patent Publication HEI No. 7-314609).

The reflective layer does not necessarily need to be formed between a sheet-like member and a near-infrared absorbing layer in laminated glass as described above, and for example, when a plurality of layers composed of resins are formed between sheet-like members, reflective layers may be formed between these layers.

Fig. 7 is a schematic cross-sectional view of an example of a laminated body of the invention. This laminated body is a window material 70 such as laminated glass having a reflective layer between a plurality of layers formed between sheet-like members, for example. The window material 70 has a structure provided with a sheet-like member 1, an infrared-absorbing composition layer 2, a reflective layer 33, a resin layer 34, an infrared-absorbing composition layer 2 and a sheet-like member 1. In this window material 70, the sheet-like member 1, infrared-absorbing composition layer 2 and reflective layer 33 may be the same types as described above. The resin layer 34 may be one comprising a publicly known resin material, and as examples of such resin materials there may be mentioned polyethylene terephthalate and polycarbonate. In a window material 70 having this manner of construction, it is sufficient to form at least one infrared-absorbing composition layer 2, but one of the plurality of the infrared-absorbing composition layers 2 mentioned above may also be a layer comprising a resin material having no near-infrared absorbing property.

By thus providing a reflective layer in addition to the infrared-absorbing composition layer (interlayer), it is possible to impart an even more excellent near-infrared insulating property for the laminated glass by the combined effect of both layers. By employing a method of improving the adhesion between the reflective layer and the infrared-absorbing composition layer as explained above, it is possible to obtain laminated glass having excellent strength in addition to the near-infrared insulating property.

The performance of the interlayer can be improved by the following methods. As examples of methods of improving penetration resistance there may be mentioned a method of using an $\alpha$-olefin modified polyvinylacetal as the resin base material as described in Japanese Examined Patent Publication HEI No. 6-25005, a method of specifying the resin polymerization degree and plasticizer addition amount as described in Japanese Unexamined Patent Publication HEI No. 10-25390, and a method of reducing the thickness variation of the interlayer as described in Japanese Unexamined Patent Publication HEI No. 11-147736.

As methods of adjusting the adhesive and cohesive properties between the interlayer and glass there may be mentioned a method of radiation grafting desaturation of the resin as described in Japanese Patent Publication No. 2624779, a method of adding a silicon oil as described in Japanese Unexamined Patent Publication HEI No. 11-322378, a method of adding an alkali metal or alkaline earth metal as described in Japanese-Unexamined Patent-Publication No. 2000-1238586, and a method of adding a surface energy modifier as described in Japanese Unexamined Patent Publication No. 2002-505210.

As methods of preventing whitening in durability testing there may be mentioned, for example, a method of adding a silicon oil having hydrocarbon groups with high hydrophobicity in the molecule, as described in Japanese Unexamined Patent Publication No. 2000-72495, a method of specifying the amount of addition of an alkali metal or alkaline earth metal as described in Japanese Unexamined Patent Publication No. 2000-128586, a method of specifying the oxyalkyleneglycol content as described in Japanese Unexamined Patent Publication No. 2001-139352, a method of using a resin with specified properties as described in Japanese Unexamined Patent Publication No. 2001-163640, and a method of sealing with a silane coupling agent as described in Japanese Unexamined Patent Publication HEI No. 6-211548.

As methods of improving ultraviolet absorption properties there may be mentioned methods of adding ultraviolet absorbers as described in Japanese Examined Patent Publication HEI No. 4-29697, Japanese Unexamined Patent Publication HEI No. 10-194796 and Japanese Unexamined Patent Publication No. 2000-128587. As antistatic methods there may be mentioned a method of adding a carboxylic acid alkali metal salt as described in Japanese Unexamined Patent Publication No. 2001-240425, and a method of adding an oxyalkylene compound as described in Japanese Unexamined Patent Publication No. 2001-261384. As a color matching method there may be mentioned the method of adding a dye described in Japanese Unexamined Patent Publication HEI No. 9-183638.

(Building material)

A building material according to this embodiment comprises a molded article which employs the aforementioned infrared-absorbing composition or resin composition. The shape of the molded article may be appropriately selected depending on the purpose of use, and as examples there may be mentioned flat shapes, arched shapes, cylindrical shapes, conical shapes and domed shapes. When the building material is composed of glass or a translucent plastic, it may be produced by a simple method of adding the infrared-absorbing composition or resin composition to the starting material during preparation, molding or working. Alternatively, the building material may be produced by attaching an infrared-absorbing film, infrared-absorbing sheet or interlayer for laminated glass made of the aforementioned infrared-absorbing composition or resin composition onto a molded article having the desired shape, by coating a mixture of the infrared-absorbing composition or resin composition with a solvent, or by coating a mixture thereof with an infrared-absorbing coating.

The building material of this embodiment is used mainly as an architectural structural member for a building

material which captures external light. As examples of building materials there may be mentioned canopy materials for arcades and other passageways, curtains, carport or garage canopy materials, sunroom wall materials, tents, blinds, fixed housing or temporary housing roof materials, covering materials for painted surfaces of road signs and the like, and other sun-shading means such as parasols. However, there is no limitation to such uses.

The aforementioned building material has a visible light transmittance of 70% or greater, and a light transmittance of no greater than 40% for light with a wavelength of 700-1000 nm. This will allow the building material of this embodiment to have excellent visibility even with an increased surface temperature. A building material according to the other embodiment also has a visible light transmittance of 70% or greater, and a light transmittance of no greater than 40% for light with a wavelength of 700-1000 nm. This will allow the building material to simultaneously exhibit excellent visible light transmitting performance and infrared-absorbing performance.

Examples

Preferred examples of the invention will now be explained in detail, with the understanding that the invention is not restricted to these examples.

(Example 1)

There were mixed 2.76 g of a mixture of 2-ethylhexyl phosphate (product of Tokyo Kasei) having a phosphoric acid monoester and phosphoric acid diester molar ratio of 50:50 with 2.24 g of di-2-ethylhexyl phosphate (product of Tokyo Kasei), to prepare a phosphoric acid ester compound with a phosphoric acid monoester and phosphoric acid diester molar ratio of 30:70. To this phosphoric acid ester compound there were added 2.24 g of copper acetate monohydrate and 15 g of toluene, the mixture was subjected to reflux for acetate removal and the toluene was distilled off, to obtain a composition comprising copper ion and a phosphoric acid ester compound. To 1.0 g of the obtained composition there was added 9.0 g of a polyvinylbutyral resin (ESREC BL-1, product of Sekisui Chemical Co., Ltd.), and the components were mixed to obtain a resin composition. Next, a press machine (WF-50, product of Shinto Metal Industries Co., Ltd.) was used for pressing of the resin composition several times at 85°C and then several times at 120°C for kneaded molding, to fabricate an infrared-absorbing sheet having a thickness of 1.0 mm and a uniform side at 30 mmφ or greater.

(Example 2)

There were mixed 3.29 g of the 2-ethylhexyl phosphate mixture of Example 1 with 1.71 g of di-2-ethylhexyl phosphate, to prepare a phosphoric acid ester compound with a phosphoric acid monoester and phosphoric acid diester molar ratio of 35:65. The phosphoric acid ester compound was then used with 2.38 g of copper acetate monohydrate to obtain a composition comprising copper ion and the phosphoric acid ester compound, and the same method as Example 1 was otherwise employed to obtain a resin composition for fabrication of an infrared-absorbing sheet.

(Example 3)

There were mixed 3.83 g of the 2-ethylhexyl phosphate mixture of Example 1 with 1.17 g of di-2-ethylhexyl phosphate, to prepare a phosphoric acid ester compound with a phosphoric acid monoester and phosphoric acid diester molar ratio of 40:60. The phosphoric acid ester compound was then used with 2.51 g of copper acetate monohydrate to obtain a composition comprising copper ion and the phosphoric acid ester compound, and the same method as Example 1 was otherwise employed to obtain a resin composition for fabrication of an infrared-absorbing sheet.

(Example 4)

To 5.00 g of the 2-ethylhexyl phosphate mixture of Example 1 there were added 2.78 g of copper acetate monohydrate and 15 g of toluene, the mixture was subj ected to reflux for acetate removal and the toluene was distilled off, to obtain a composition comprising copper ion and the phosphoric acid ester compound, and the same method as Example 1 was otherwise employed to obtain a resin composition for fabrication of an infrared-absorbing sheet.

(Example 5)

A composition comprising copper ion and a phosphoric acid ester compound was obtained using 5.00 g of an n-butyl phosphate mixture (Tokyo Kasei) with a phosphoric acid monoester and phosphoric acid diester molar ratio of 50:50 and 2.37 g of copper acetate monohydrate, and the same method as Example 1 was otherwise employed to obtain a resin composition for fabrication of an infrared-absorbing sheet.

(Example 6)

A solution was prepared by dissolving 296.4 g (2.0 moles) of the alcohol represented by formula (21) below in 100 g of a toluene solvent. The solution was kept at 5°C while gradually adding 94.6 g (0.66 mole) of diphosphorus pentaoxide, and after stirring and mixing the total amount, stirring was continued for 15 hours. After then stirring the mixture at 60°C for 8 hours, 7 ml of water was added, the temperature was raised to 100°C and stirring was continued for 3 hours. Upon completion of the reaction, the toluene and unreacted alcohol were distilled off under reduced pressure to obtain 265 g of a phosphoric acid ester compound. The obtained phosphoric acid ester compound was analyzed by $^{31}$P-NMR and confirmed to have a phosphoric acid monoester and phosphoric acid diester molar ratio of 50:50. A composition comprising copper ion and the phosphoric acid ester compound was obtained using 5.00 g of the phosphoric acid ester compound and 4.50 g of copper acetate monohydrate, and the same method as Example 1 was otherwise employed

to obtain a resin composition for fabrication of an infrared-absorbing sheet.

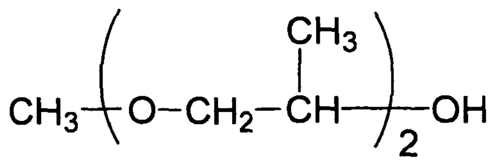

(21)

(Example 7)

A phosphoric acid ester compound was obtained by the same method as Example 6, except that 132.2 g (2.0 moles) of the alcohol represented by formula (22) below was used instead of the alcohol represented by formula (21) above. The obtained phosphoric acid ester was analyzed by $^{31}$P-NMR and confirmed to have a phosphoric acid monoester and phosphoric acid diester molar ratio of 50:50. A composition comprising copper ion and the phosphoric acid ester compound was obtained using 5.00 g of the phosphoric acid ester compound and 4.71 g of copper acetate monohydrate, and the same method as Example 1 was otherwise employed to obtain a resin composition for fabrication of an infrared-absorbing sheet.

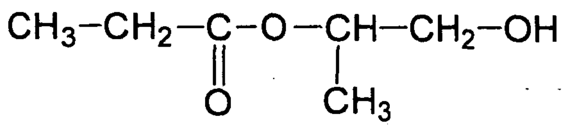

(22)

(Example 8)

A composition comprising copper ion and a phosphoric acid ester compound was obtained using 5.00 g of an isodecyl phosphate mixture with a phosphoric acid monoester and phosphoric acid diester molar ratio of 50:50 (AP-10, product of Daihachi Chemical Industry Co., Ltd.) and 2.43 g of copper acetate monohydrate, and the same method as Example 1 was otherwise employed to obtain a resin composition for fabrication of an infrared-absorbing sheet.

(Example 9)

The 2-ethylhexyl phosphate mixture of Example 1 was mixed with mono-2-ethylhexyl phosphate (Johoku Chemical Co., Ltd.) to prepare a phosphoric acid ester compound with a phosphoric acid monoester and phosphoric acid diester molar ratio of 60:40. A composition comprising copper ion and the phosphoric acid ester compound was obtained using 5.00 g of the phosphoric acid ester compound and 3.16 g of copper acetate monohydrate, and the same method as Example 1 was otherwise employed to obtain a resin composition for fabrication of an infrared-absorbing sheet.

(Example 10)

The 2-ethylhexyl phosphate mixture of Example 1 was mixed with di-2-ethylhexyl phosphate to prepare a phosphoric acid ester compound with a phosphoric acid monoester and phosphoric acid diester molar ratio of 65:35. A composition comprising copper ion and the phosphoric acid ester compound was obtained using 5 g of the obtained phosphoric acid ester compound and 1 g of copper acetate monohydrate, and the same method as Example 1 was otherwise employed to obtain a resin composition for fabrication of an infrared-absorbing sheet.

(Example 11)

To 1.0 g of a composition comprising copper ion and a phosphoric acid ester compound prepared by the same method as Example 4 there were added 7.00 g of a polyvinylbutyral resin (ESREC BM-1, product of Sekisui Chemical Co., Ltd.) and 2.00 g of a plasticizer (3GO (triethyleneglycol di-2-ethylhexanate), product of Acros Corp.), and the same method as Example 1 was employed to obtain a resin composition for fabrication of an infrared-absorbing sheet.

(Example 12)

To 0.5 g of a composition comprising copper ion and a phosphoric acid ester compound prepared by the same method as Example 4 there were added 7.50 g of a polyvinylbutyral resin (ESREC BM-1, product of Sekisui Chemical Co., Ltd.) and 2.00 g of a plasticizer (3GO (triethyleneglycol di-2-ethylhexanate), product of Acros Corp.), and the same method as Example 1 was employed to obtain a resin composition for fabrication of an infrared-absorbing sheet.

(Example 13) To 2.0 g of a composition comprising copper ion and a phosphoric acid ester compound prepared by the same method as Example 4 there were added 600 g of a polyvinylbutyral resin (ESREC BM-1, product of Sekisui Chemical Co., Ltd.) and 2.00 g of a plasticizer (3GO (triethyleneglycol di-2-ethylhexanate), product of Acros Corp.), and the same method as Example 1 was employed to obtain a resin composition for fabrication of an infrared-absorbing sheet.

(Example 14)

To 1.0 g of a composition comprising copper ion and a phosphoric acid ester compound prepared by the same method

as Example 4 there were added 7.00 g of a polyvinylbutyral resin (ESREC BH-3, product of Sekisui Chemical Co., Ltd.) and 2.00 g of a plasticizer (3GO (triethyleneglycol di-2-ethylhexanate), product of Acros Corp.), and the same method as Example 1 was employed to obtain a resin composition for fabrication of an infrared-absorbing sheet.

(Example 15)

A composition comprising copper ion and a phosphoric acid ester compound was obtained using 5.00 g of an oleyl phosphate mixture with a phosphoric acid monoester and phosphoric acid diester molar ratio of 50:50 (product of Tokyo Kasei) and 1.58 g of copper acetate monohydrate, and the same method as Example 11 was otherwise employed to obtain a resin composition for fabrication of an infrared-absorbing sheet.

(Example 16)

A plasticizer was prepared by dispersing 2.3 g of tin-doped indium oxide (ITO, mean particle size ≤80 nm) in 200 g of 3GO. Except for using 2.00 g of this obtained plasticizer, a resin composition was obtained by the same method as Example 11 for fabrication of an infrared-absorbing sheet.

(Comparative Example 1)

To 66.6 g of the di-2-ethylhexyl phosphate of Example 1 there were added 20.0 g of copper acetate monohydrate and 180 g of toluene, the mixture was subjected to reflux for acetate removal and the toluene was distilled off, to obtain a composition comprising copper ion and the phosphoric acid ester compound, and the same method as Example 1 was otherwise employed to obtain a resin composition for fabrication of an infrared-absorbing sheet.

(Comparative Example 2)

There were mixed 1.00 g of the 2-ethylhexyl phosphate mixture of Example 1 with 4.00 g of di-2-ethylhexyl phosphate, to prepare a phosphoric acid ester compound with a phosphoric acid monoester and phosphoric acid diester molar ratio of 10:90. The phosphoric acid ester compound was then used with 1.76 g of copper acetate monohydrate to obtain a composition comprising copper ion and the phosphoric acid ester compound, and the same method as Example 1 was otherwise employed to obtain a resin composition for fabrication of an infrared-absorbing sheet.

(Comparative Example 3)

There were mixed 2.00 g of the 2-ethylhexyl phosphate mixture of Example 1 with 3.00 g of di-2-ethylhexyl phosphate, to prepare a phosphoric acid ester compound with a phosphoric acid monoester and phosphoric acid diester molar ratio of 20:80. The phosphoric acid ester compound was then used with 2.00 g of copper acetate monohydrate to obtain a composition comprising copper ion and the phosphoric acid ester compound, and the same method as Example 1 was otherwise employed to obtain a resin composition for fabrication of an infrared-absorbing sheet.

(Comparative Example 4)

There were mixed 2.50 g of the 2-ethylhexyl phosphate mixture of Example 1 with 2.50 g of di-2-ethylhexyl phosphate, to prepare a phosphoric acid ester compound with a phosphoric acid monoester and phosphoric acid diester molar ratio of 25:75. The phosphoric acid ester compound was then used with 2.18 g of copper acetate monohydrate to obtain a composition comprising copper ion and the phosphoric acid ester compound, and the same method as Example 1 was otherwise employed to obtain a resin composition for fabrication of an infrared-absorbing sheet.

(Comparative Example 5)

The 2-ethylhexyl phosphate mixture of Example 1 was mixed with mono-2-ethylhexyl phosphate (Johoku Chemical Co., Ltd.) to prepare a phosphoric acid ester compound with a phosphoric acid monoester and phosphoric acid diester molar ratio of 75:25. To 5.00 g of this phosphoric acid ester there were added 4.70 g of copper acetate monohydrate and 15 g of toluene, the mixture was subjected to reflux and the toluene was distilled off, but a precipitate was produced and a composition comprising copper ion and a phosphoric acid ester could not be obtained.

(Evaluation of outer appearance upon heating)

The infrared absorbing sheets obtained in Examples 1-16 and Comparative Examples 1-4 were wrapped with Kurewrap (trade name of Kureha Chemical Industry Co., Ltd.) in a watertight manner to prepare test samples. Each of the test samples was immersed for 20 seconds in a hot bath at 70°C. After removing the test sample from the hot bath, the outer appearance of the infrared-absorbing sheet was visually observed and evaluated according to the scale shown below. The evaluation results for the infrared-absorbing sheets of Examples 1-8 and Comparative Examples 1-4 are shown in Table 1. The evaluation results for the infrared-absorbing sheets of Examples 9-16 are shown in Table 2.

◎: Absolutely no clouding observed, transparency maintained

o: Slight clouding observed, transparency essentially maintained

Δ: Semi-transparent state

×: Opaque

(Haze measurement)

The infrared-absorbing sheets obtained in Examples 1-16 and Comparative Examples 1-4 were measured for haze before and after immersion for 20 seconds in the hot bath at 70°C, using a turbidimeter (Model NDH-1001DP, product of Nippon Denshoku). The measurement results for the infrared-absorbing sheets of Examples 1-8 and Comparative Examples 1-4 are shown in Table 1. The measurement results for the infrared-absorbing sheets of Examples 9-16 are shown in Table 2.

[Table 1]

| | | Example | | | | | | | | Comp. Ex. | | | |
|---|---|---|---|---|---|---|---|---|---|---|---|---|---|
| | | 1 | 2 | 3 | 4 | 5 | 6 | 7 | 8 | 1 | 2 | 3 | 4 |
| Phosphoric acid ester component ratio (mol%) | Monoester | 30 | 35 | 40 | 50 | 50 | 50 | 50 | 50 | 0 | 10 | 20 | 25 |
| | Diester | 70 | 65 | 60 | 50 | 50 | 50 | 50 | 50 | 100 | 90 | 80 | 75 |
| Haze (%) | Before immersion (25°C) | 20.0 | 15.9 | 18.8 | 10.2 | 46.1 | 28.1 | 63.2 | 13.8 | 15.0 | 18.8 | 19.7 | 26.6 |
| | After immersion (70°C) | 62.9 | 47.1 | 36.7 | 10.5 | 44.1 | 29.4 | 62.7 | 13.9 | 86.6 | 85.4 | 76.9 | 74.1 |
| \|ΔHaze\| (%) | | 42.9 | 31.2 | 17.9 | 0.3 | 2.0 | 1.3 | 0.5 | 0.1 | 71.6 | 66.6 | 57.2 | 47.5 |
| Outer appearance evaluation | | ○ | ○ | ◎ | ◎ | ◎ | ◎ | ◎ | ◎ | × | × | × | Δ |

[Table 2]

| | | Example | | | | | | | |
|---|---|---|---|---|---|---|---|---|---|
| | | 9 | 10 | 11 | 12 | 13 | 14 | 15 | 16 |
| Phosphoric acid ester component ratio (mol%) | Monoester | 60 | 65 | 50 | 50 | 50 | 50 | 50 | 50 |
| | Diester | 40 | 35 | 50 | 50 | 50 | 50 | 50 | 50 |
| Haze (%) | Before immersion (25°C) | 8.6 | 7.3 | 6.4 | 1.5 | 12.1 | 8.5 | 10.9 | 11.4 |
| | After immersion (70°C) | 7.1 | 7.5 | 8.0 | 1.5 | 36.5 | 11.2 | 10.5 | 12.9 |
| \|ΔHaze\| (%) | | 1.5 | 0.2 | 1.6 | 0 | 24.4 | 2.7 | 0.4 | 1.5 |
| Outer appearance evaluation | | ◎ | ◎ | ◎ | ◎ | o | ◎ | ◎ | ◎ |

(Spectral transmittance measurement 1)
The spectral transmittance of the resin composition prepared in Example 4 was measured using a spectrophotometer (U-4000, product of Hitachi Laboratories). The measurement results for the spectral transmittance are shown in Fig. 8. The visible light transmittance was 77%.

(Laminated glass fabrication 1)
(Example 17)
The infrared-absorbing sheet obtained in Example 4 was cut to a size of 76 mm x 26 mm, sandwiched between transparent slide glass panels (76 mm length × 26 mm width x 1.1 mm thickness) on either side, immersed in a hot bath at 100°C and allowed to stand for 2 hours to fabricate laminated glass.

(Example 18)
The infrared-absorbing sheet obtained in Example 11 was cut to a size of 76 mm x 26 mm and sandwiched between transparent slide glass panels (76 mm length × 26 mm width x 1.1 mm thickness) on either side. The obtained pre-contact bonding body was then subjected to contact bonding for 30 minutes in an autoclave at an internal pressure of 1.5 MPa and a temperature of 130°C to fabricate laminated glass.

(Example 19) Laminated glass was fabricated by the same method as Example 18, except that the slide glass was replaced with green glass (Asahi Glass Co., Ltd.).

(Example 20)
Laminated glass was fabricated by the same method as Example 18, except that the infrared-absorbing sheet obtained in Example 11 was replaced with the infrared-absorbing sheet obtained in Example 16, and the slide glass was replaced with green glass (Asahi Glass Co.,
Ltd.).

(Comparative Example 6)
A PVB resin sheet was produced by the same method as Example 1, using 7.00 g of a polyvinylbutyral resin (ESREC BH-3, product of Sekisui Chemical Co., Ltd.) and 3.00 g of a plasticizer (3GO (triethyleneglycol di-2-ethylhexanate), product of Acros Corp.). The obtained sheet was cut to a size of 76 mm x 26 mm and laminated glass was obtained by the same method as Example 18.

(Comparative Example 7)
The interlayer of a commercially available automobile laminated glass product (COOLVEIL, Asahi Glass Co., Ltd.) was removed and shaped into a resin sheet with a thickness of 1.0 mm and then cut to a size of 76 mm × 26 mm, and laminated glass was fabricated by the same method as Example 18.

(Spectral transmittance measurement 2)
The spectral transmittances of the infrared-absorbing sheet obtained in Example 11 and the laminated glass obtained in Examples 17-20 and Comparative Examples 6-7 were measured using a spectrophotometer (U-4000, product of Hitachi Laboratories). The measurement results for the spectral transmittances are shown in Fig. 9. In Fig. 9, A represents the spectral transmittance of the infrared-absorbing sheet obtained in Example 11, B represents the spectral transmittance of the laminated glass obtained in Example 17, C represents the spectral transmittance of the laminated glass obtained in Example 18, D represents the spectral transmittance of the laminated glass obtained in Example 19, E represents the spectral transmittance of the laminated glass obtained in Example 20, F represents the spectral transmittance of the laminated glass obtained in Comparative Example 6 and G represents the spectral transmittance of the laminated glass obtained in Comparative Example 7. The visible light transmittance, transmittance at 700 nm and transmittance at 1000 nm for the infrared-absorbing sheet obtained in Example 11 and the laminated glass obtained in Examples 17-20 and Comparative Examples 6 and 7 are shown in Table 3.

[Table 3]

| | Visible light transmittance (%) | Transmittance at 700 nm (%) | Transmittance at 1000 nm (%) |
|---|---|---|---|
| Example 17 | 71.04 | 24.35 | 25.44 |
| Example 11 | 84.06 | 36.57 | 37.25 |
| Example 18 | 83.00 | 35.77 | 36.35 |
| Example 19 | 72.65 | 22.46 | 11.98 |
| Example 20 | 70.83 | 22.44 | 11.67 |
| Comp. Ex. 6 | 84.73 | 86.02 | 85.58 |
| Comp. Ex. 7 | 71.80 | 85.79 | 77.13 |

The results in Fig. 9 and Table 3 confirmed that the infrared-absorbing sheet of Example 11 and the laminated glass of Examples 17-20 can effectively block sunlight in the near infrared region of 700-1000 nm, compared to the laminated glass of Comparative Examples 6 and 7. Also, since the region below 700 nm is the visible light region, absorption in this region reduces the visible light transmittance. The results in Fig. 9 and Table 3 confirmed that the infrared-absorbing sheet of Example 11 and the laminated glass of Examples 17-20 have sufficient visible light transmitting properties in the region below 700 nm, compared to the laminated glass of Comparative Examples 6 and 7.

(Laminated glass fabrication 2)

(Example 21)

A resin sheet produced by the same method as Example 11 was cut to a size of 325 mm × 385 mm, sandwiched between two 325 mm × 385 mm × 2.0 mm float glass plates and subjected to pre-contact bonding by a roll method, after which it was contact bonded in an autoclave for 30minutes at a pressure of 1.5 MPa at a temperature of 130°C to fabricate laminated glass.

(Comparative Example 8)

Laminated glass was fabricated by the same method as Example 21, using a resin sheet produced by the same method as Comparative Example 6.

(Comparative Example 9)

Laminated glass was fabricated by the same method as Example 21, using a resin sheet produced by the same method as Comparative Example 7.

(Evaluation of heat ray-cutting)

The laminated glass obtained as described above was used for evaluation of the heat ray-cutting effect in the following manner. The laminated glass G1, G2 and G3 obtained in Example 21, Comparative Example 8 and Comparative Example 9, respectively, were situated on automobile front glass WS as shown in Fig. 10 and Fig. 11. Thermocouples were attached at temperature measurement points P1-P3 located on the dashboard DB under each laminated glass G1, G2, G3. This allowed measurement of temperature changes on the dashboard DB at the temperature measurements P1-P3 with respect to the passing time. The measurement results are shown in Fig. 12. In Fig. 12, H represents the temperature change on the dashboard DB surface at temperature measurement point P1, I represents the temperature change on the dashboard DB surface at temperature measurement point P2, J represents the temperature change on the dashboard DB surface at temperature measurement point P3, and "+" represents the external temperature.

The measurement results in Fig. 12 indicated that the laminated glass G1 obtained in Example 21 can be suitably used as a heat ray-cutting filter. The laminated glass G1 of Example 21 was also confirmed to have a much higher heat ray-cutting effect than the laminated glass G3 obtained in Comparative Example 9. This demonstrates that the heat ray-cutting effect of laminated glass which blocks light with a wavelength of 700-1000 nm (for example, see A in Fig. 9) is much higher than that of laminated glass which blocks light with a wavelength outside of the range of 700-1000 nm (for example, see G in Fig. 9).

## Industrial Applicability

According to the present invention, it is possible to provide an infrared-absorbing composition and resin composition having high visible light transmittance not only at ordinary temperature but also at higher temperatures, while also exhibiting excellent infrared-absorbing performance. Further, it is possible to provide interlayers for laminated glass, laminated bodies, laminated glass and building materials which have excellent visibility even with increased surface temperature.

## Claims

**1.** An infrared-absorbing composition comprising a phosphoric acid ester compound including a phosphoric acid monoester represented by formula (1) below and a phosphoric acid diester represented by formula (2) below, and copper ion, wherein the ratio of said phosphoric acid monoester and said phosphoric acid diester is 30:70 to 74:26, as the molar ratio.

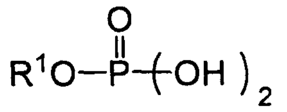 (1)

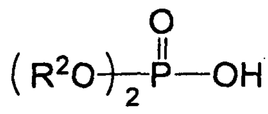 (2)

(wherein $R^1$ and $R^2$ each independently represent an ester bond-containing C4-18 group, a C4-18 alkyl group, a C4-18 alkenyl group or a C4-18 alkynyl group, and the multiple $R^2$ groups may be the same or different).

**2.** A resin composition comprising an infrared-absorbing composition according to claim 1 and a resin.

**3.** A resin composition according to claim 2, wherein said resin is a polyvinylacetal-based resin, an ethylene-vinyl acetate copolymer or its saponified copolymer.

**4.** An interlayer for laminated glass comprising a resin composition according to claim 2 or 3.

**5.** A laminated body provided with a layer comprising a resin composition on a base made of a translucent material, wherein said resin composition is a resin composition according to claim 2 or 3.

**6.** Laminated glass provided with an interlayer comprising a resin composition between a pair of glass panels, wherein said resin composition is a resin composition according to claim 2 or 3.

**7.** A building material comprising a molded article from a resin composition according to claim 2 or3.

**8.** A resin composition according to claim 2 or 3, wherein the visible light transmittance is 70% or greater and the transmittance for light with a wavelength of 700-1000 nm is no greater than 40%.

**9.** A resin composition comprising a polyvinylacetal-based resin, an ethylene-vinyl acetate copolymer or its saponified copolymer,
wherein the visible light transmittance is 70% or greater and the transmittance for light with a wavelength of 700-1000 nm is no greater than 40%.

**10.** An interlayer for laminated glass, wherein the visible light transmittance is 70% or greater and the transmittance for light with a wavelength of 700-1000 nm is no greater than 40%.

**11.** A laminated body, wherein the visible light transmittance is 70% or greater and the transmittance for light with a wavelength of 700-1000 nm is no greater than 40%.

**12.** Laminated glass, wherein the visible light transmittance is 70% or greater and the transmittance for light with a wavelength of 700-1000 nm is no greater than 40%.

**13.** A building material, wherein the visible light transmittance is 70% or greater and the transmittance for light with a wavelength of 700-1000 nm is no greater than 40%.

*Fig.1*

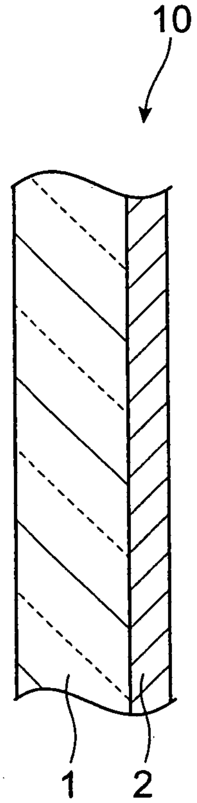

**Fig.2**

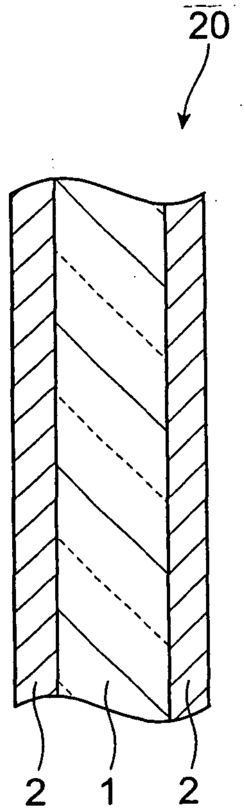

*Fig.3*

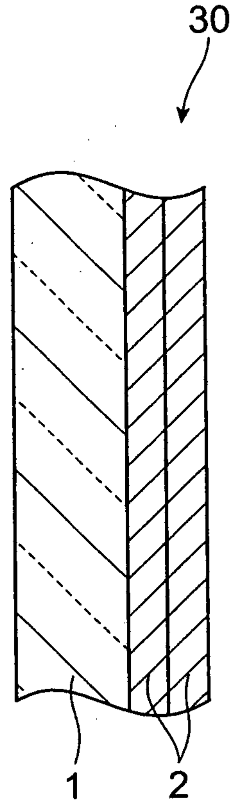

Fig.4

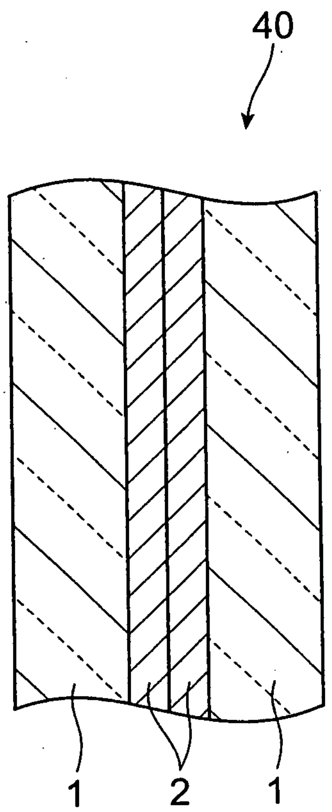

Fig.5

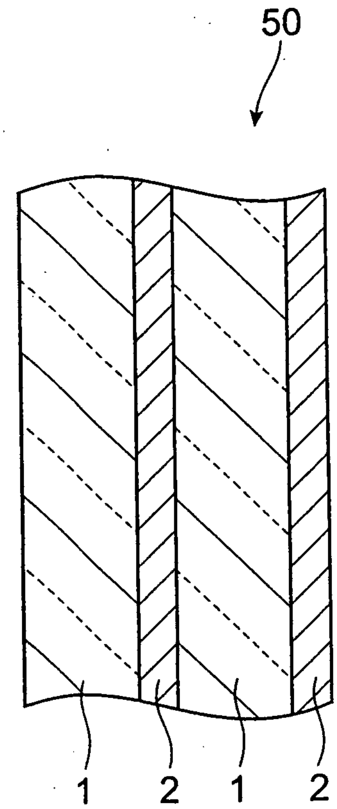

Fig.6

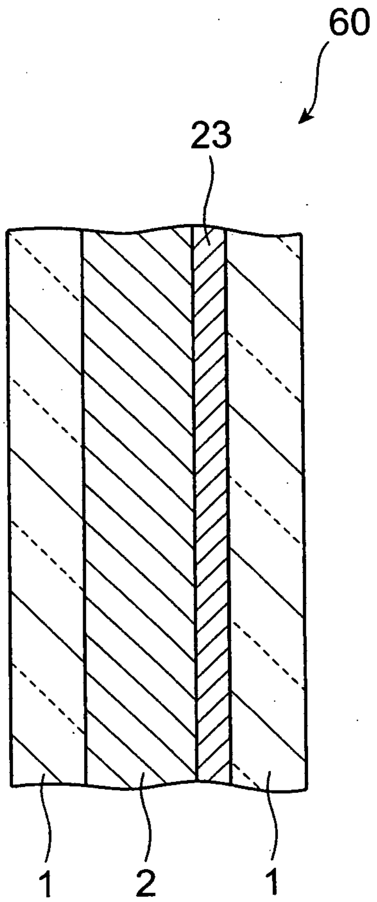

Fig.7

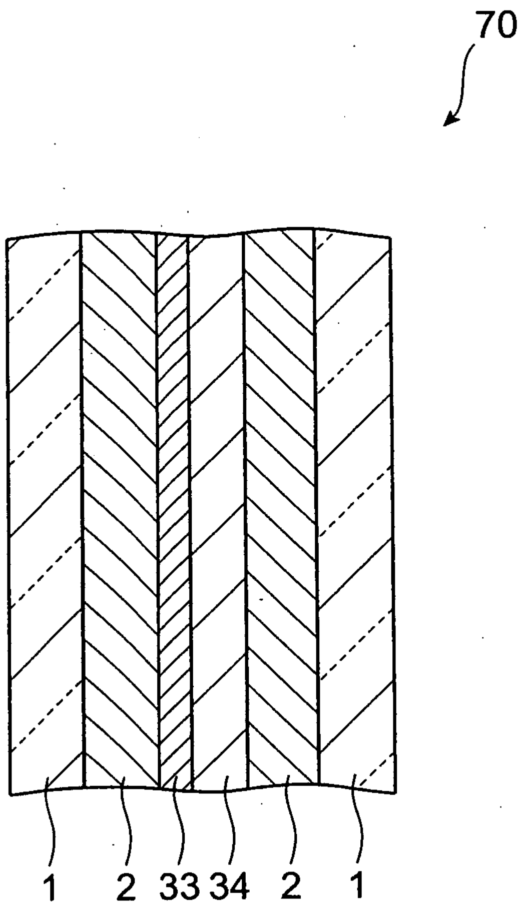

*Fig.8*

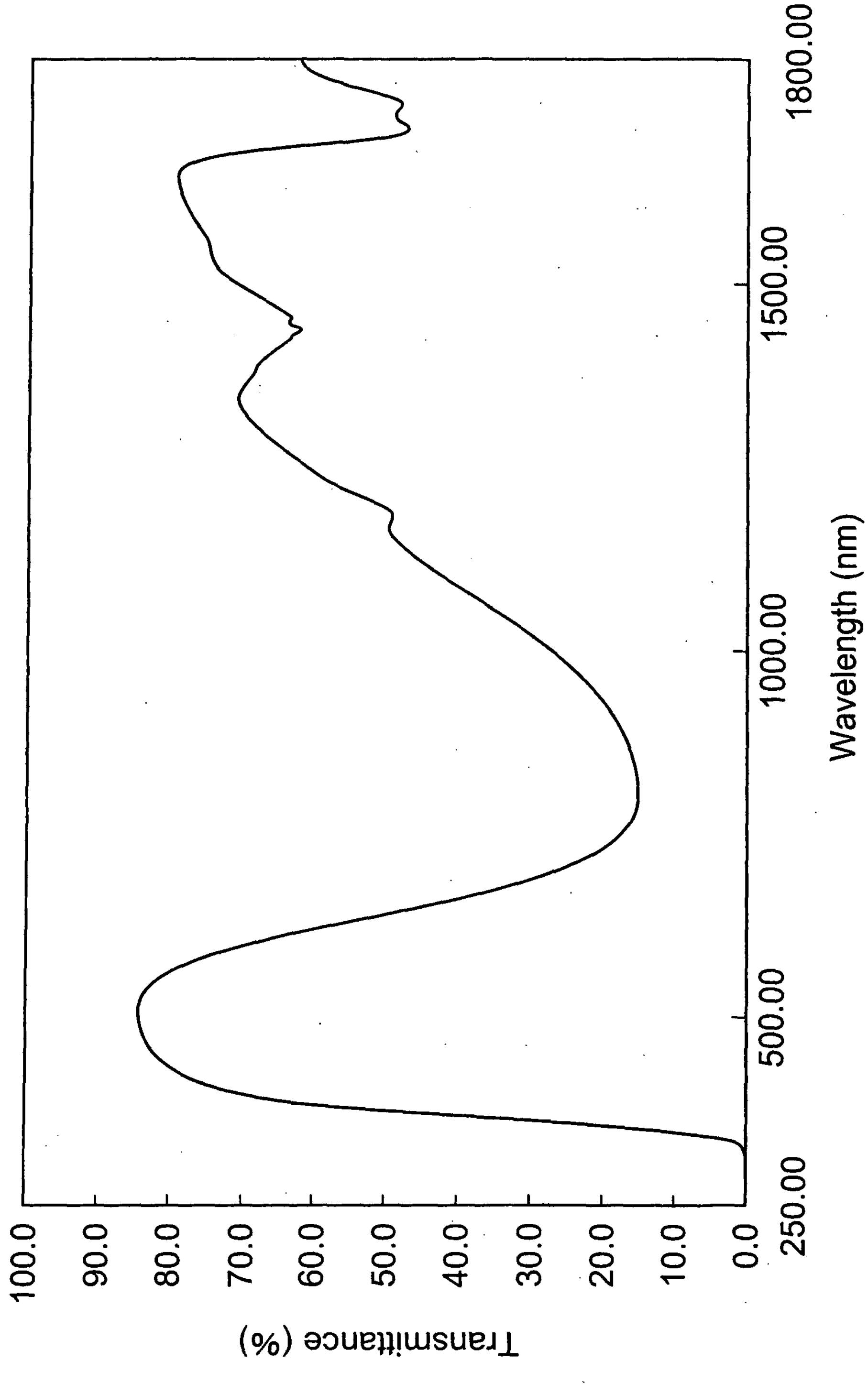
Transmittance (%)
100.0
90.0
80.0
70.0
60.0
50.0
40.0
30.0
20.0
10.0
0.0
250.00
500.00
1000.00
1500.00
1800.00
Wavelength (nm)

Fig.9

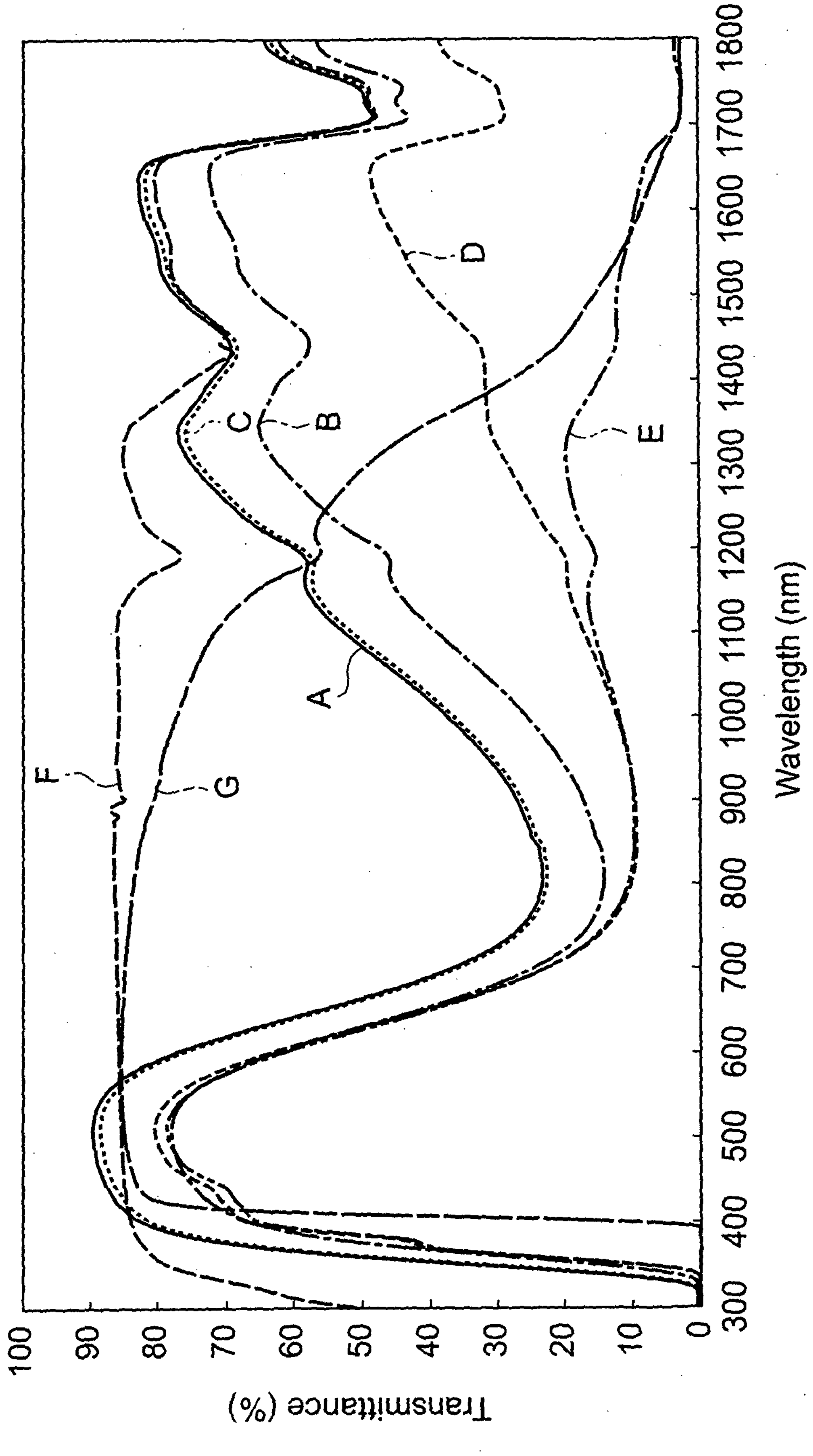
Transmittance (%)
100
90
80
70
60
50
40
30
20
10
0
300
400
500
600
700
800
900
1000
1100
1200
1300
1400
1500
1600
1700
1800
Wavelength (nm)
A
B
C
D
E
F
G

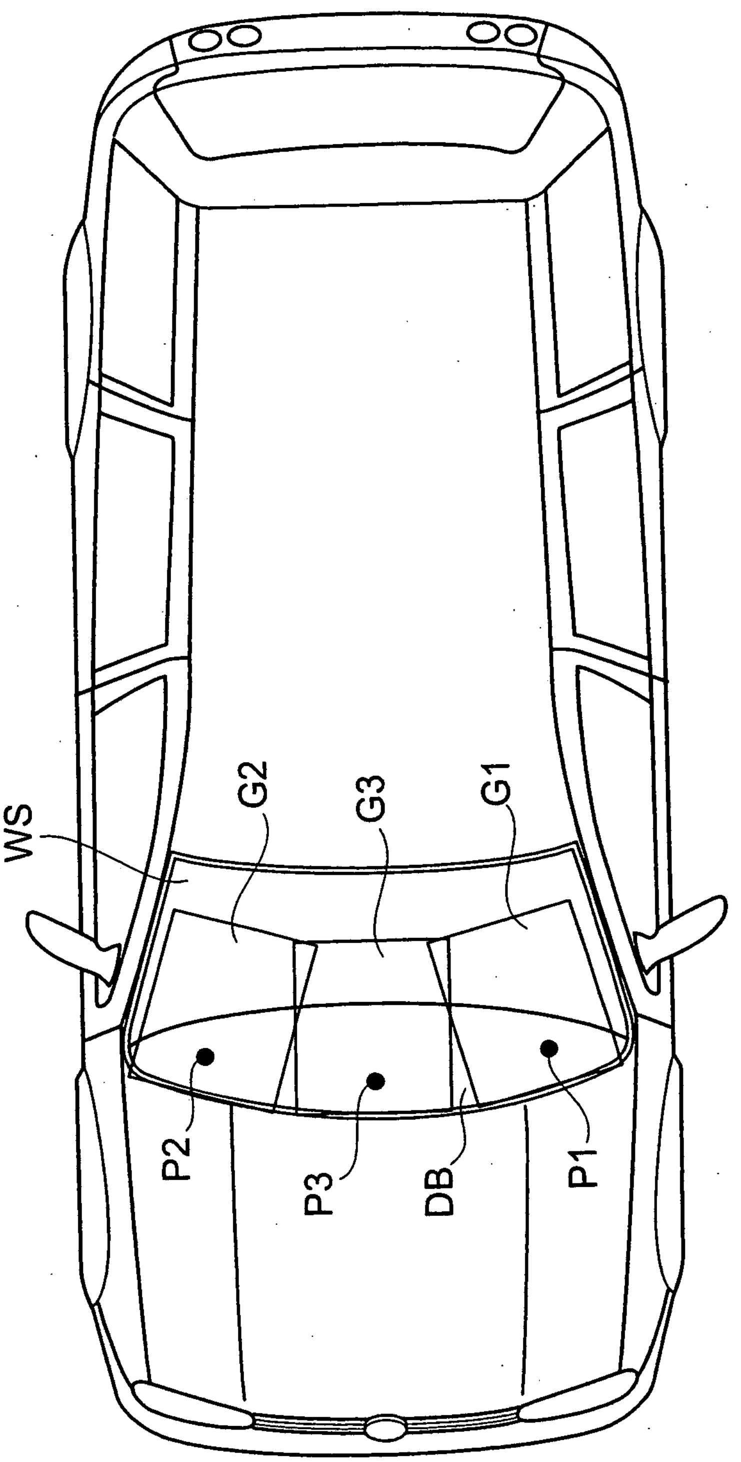


Fig.10

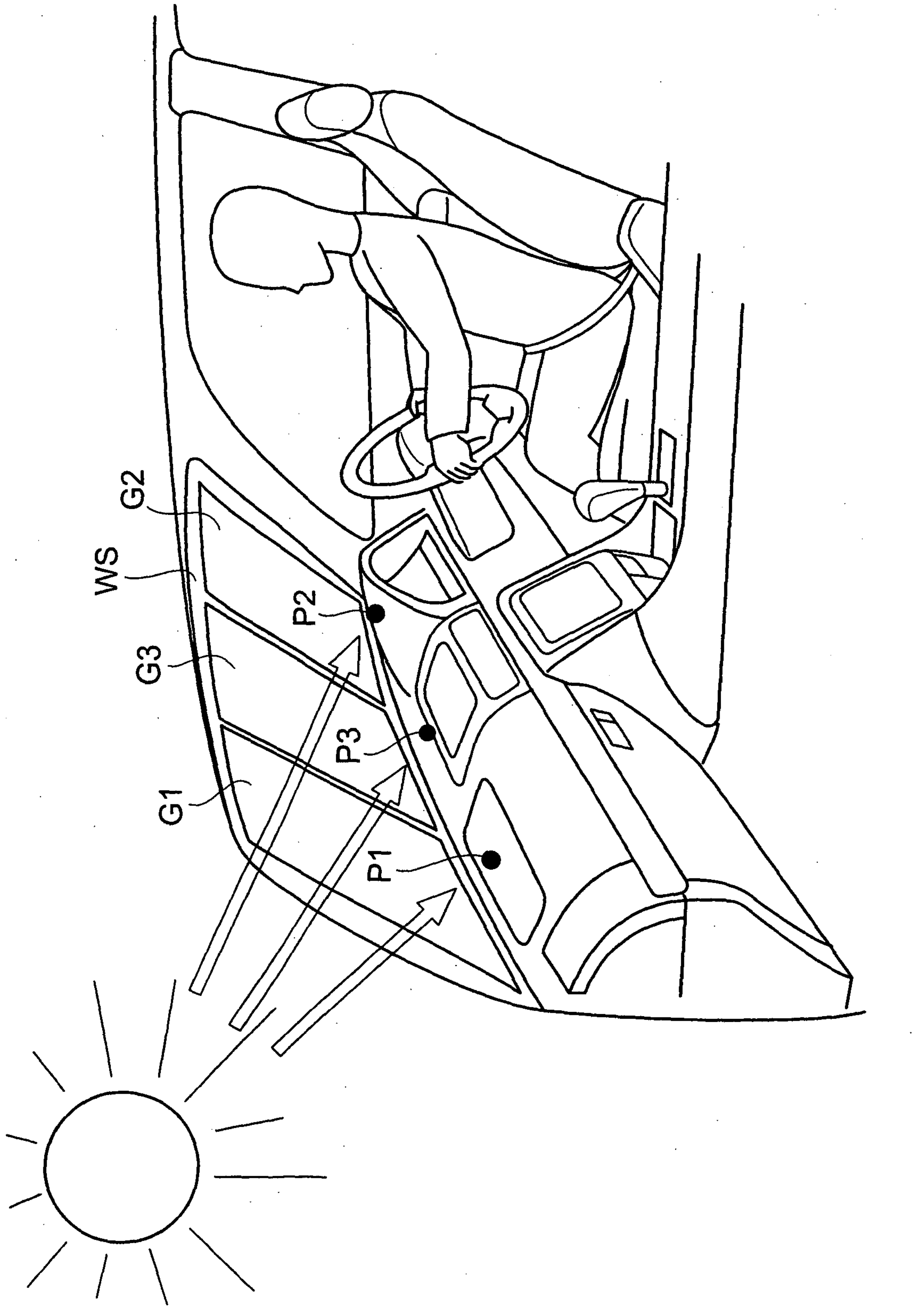


Fig.11

Fig.12

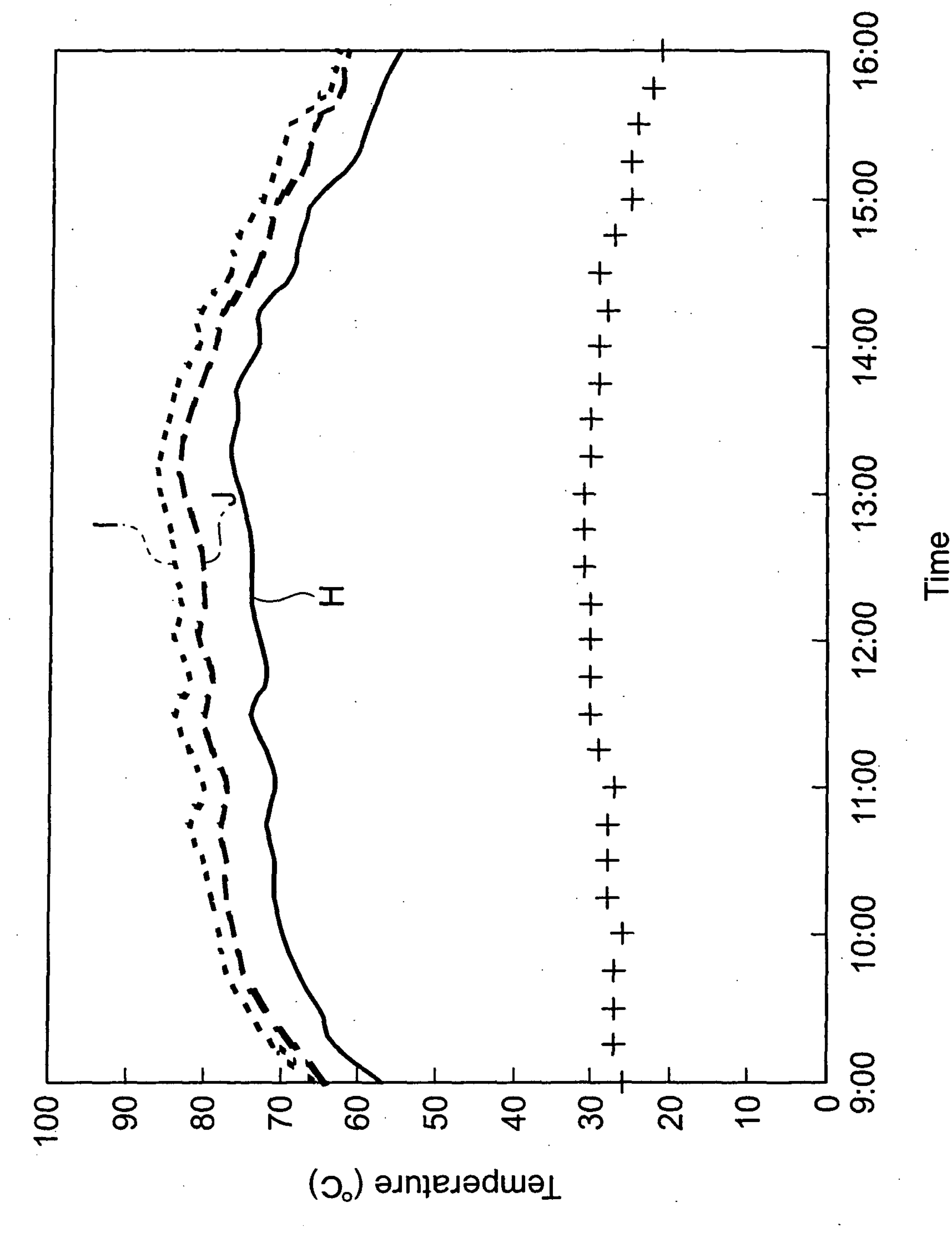
Temperature (°C)
100
90
80
70
60
50
40
30
20
10
0
9:00
10:00
11:00
12:00
13:00
14:00
15:00
16:00
Time
H
I
J

**INTERNATIONAL SEARCH REPORT**

International application No.
PCT/JP2004/011105

A. CLASSIFICATION OF SUBJECT MATTER
Int.Cl[7] C09K3/00, C08K3/08, C08K5/521, C08L29/04, C08L29/14, C08L31/04, C08L101/00, E04B1/80

According to International Patent Classification (IPC) or to both national classification and IPC

B. FIELDS SEARCHED

Minimum documentation searched (classification system followed by classification symbols)
Int.Cl[7] C09K3/00, C08K3/08, C08K5/521-5/523, C08L29/04, C08L29/14, C08L31/04, C08L101/00-101/16, E04B1/80

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2000-248259 A (Kureha Chemical Industry Co., Ltd.), 12 September, 2000 (12.09.00), Claims 1, 5, 6; Par. Nos. [0005], [0060], [0074] to [0088], [0090] to [0101] & WO 00/50530 A1 | 1-3,5,7-13<br>4,6 |
| Y | JP 9-211220 A (Kureha Chemical Industry Co., Ltd.), 15 August, 1997 (15.08.97), Claims 4, 6, 7; Par. Nos. [0002], [0055] & WO 97/28226 A1 | 4,6 |
| A | JP 57-70146 A (Mitsubishi Rayon Co., Ltd.), 30 April, 1982 (30.08.82), (Family: none) | 1-13 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>27 October, 2004 (27.10.04) | Date of mailing of the international search report<br>16 November, 2004 (16.11.04) |
| Name and mailing address of the ISA/<br>Japanese Patent Office<br>Facsimile No. | Authorized officer<br>Telephone No. |

Form PCT/ISA/210 (second sheet) (January 2004)